# EUROPEAN PATENT APPLICATION

(11) **EP 4 509 901 A1**
(43) Date of publication of application: **19.02.2025**
(21) Application number: 22885079.8
(22) Date of filing: 25.05.2022
(51) Int. Cl.: G02B 27/01, B32B 17/10

(54) **HEAD-UP DISPLAY SYSTEM AND DESIGN METHOD FOR HEAD-UP DISPLAY SYSTEM**

(71) Applicant: Fuyao Glass Industry Group Co., Ltd., Fuqing, Fujian 350300 (CN)
(72) Inventor: HE, Changlong, Fuqing Fujian 350300 (CN)
(74) Representative: Mewburn Ellis LLP
(86) International application number: PCT/CN2022/095073
(87) International publication number: WO 2023/071169

(57) **Abstract**

A head-up display (HUD) system and a method for designing the HUD system are provided. The HUD system includes a laminated glass and a projection assembly. The laminated glass has at least one projection display region. In the case where the laminated glass is mounted to a vehicle, each of the at least one projection display region has a wedge-shaped cross-section in which a thickness of an upper side edge is greater than a thickness of a lower side edge, and has a zone in which a wedge angle decreases in a direction from the lower side edge to the upper side edge, and at each of multiple points within the zone, there are a measured wedge-angle value and multiple theoretical wedge-angle values, where with the multiple theoretical wedge-angle values reflected ghosting is eliminated. An actual wedge-angle fitting curve is obtained by fitting the measured wedge-angle values at the multiple points within the zone. The actual wedge-angle fitting curve has a continuous curve located within a preset region. The projection assembly includes at least one projection light source capable of projecting light onto the at least one projection display region, where projection light emitted by the at least one projection light source is incident onto the at least one projection display region to form a projection image. The HUD system provided can reduce or even eliminate ghosting in the HUD image that is dynamically observed from multiple positions.

## Description

### TECHNICAL FIELD

The disclosure relates to the field of automobiles, an in particular, to a head-up display (HUD) system and a method for designing the HUD system.

### BACKGROUND

With the development of automobile intelligence, head-up display (HUD) systems are increasingly used in vehicles. The HUD system is configured to display images, such as driving information, in real time on a front windshield. When the vehicle is driven on roads with varying slopes or uneven surfaces, the vehicle will experience a certain degree of bumpiness, so that the position of the driver's eyes in a direction perpendicular to the road will vary, and thus ghosting or aggravated ghosting may be observed by the driver for HUD images, which is equivalent to observing the HUD images from a position higher or lower than a specific eye level. This type of ghosting is referred to as overall dynamic ghosting.

Additionally, during the actual manufacturing process of laminated glass, a wedge-angle curve of an intermediate wedge-shaped polyvinyl butyral (PVB) film is not desirably smooth, local fluctuations of the intermediate wedge-shaped PVB film may also cause uneven distribution of ghosting on the same virtual image plane, and thus ghosting or aggravated ghosting may be observed by the driver for the HUD images at specific local positions. This type of ghosting is referred to as local dynamic ghosting.

The overall dynamic ghosting and the local dynamic ghosting are collectively referred to as dynamic ghosting. Dynamic ghosting causes a size of the ghosting in the HUD images to change dynamically with the movement of the driver's observation position, leading to ghosting or aggravated ghosting of the HUD images during actual use, which affects the driving experience.

### SUMMARY

In a first aspect, a head-up display (HUD) system is provided in embodiments of the disclosure. The HUD system includes a laminated glass and a projection assembly. The laminated glass has at least one projection display region. In the case where the laminated glass is mounted to a vehicle, each of the at least one projection display region has a wedge-shaped cross-section in which a thickness of an upper side edge is greater than a thickness of a lower side edge, and has a zone in which a wedge angle decreases in a direction from the lower side edge to the upper side edge, and at each of multiple points within the zone, there are a measured wedge-angle value and multiple theoretical wedge-angle values, where with the multiple theoretical wedge-angle values reflected ghosting is eliminated. An actual wedge-angle fitting curve is obtained by fitting the measured wedge-angle values at the multiple points within the zone, multiple limiting points are calculated according to the multiple theoretical wedge-angle values at each point within the zone and a distance from an incident point corresponding to each of the multiple theoretical wedge-angle values to a bottom edge of the laminated glass, a preset region is formed by sequentially connecting the multiple limiting points, and the actual wedge-angle fitting curve has a continuous curve located within the preset region. The projection assembly includes at least one projection light source capable of projecting light onto the at least one projection display region, wherein projection light emitted by the at least one projection light source is incident onto the at least one projection display region to form a projection image.

In a second aspect, a method for designing a HUD system is further provided in the embodiments of the disclosure. The method for designing the HUD system includes the following. A projection assembly and a laminated glass are provided. Projection light emitted by the projection assembly is incident onto at least one projection display region of the laminated glass. An eyebox plane inside a vehicle is designed according to an observer inside the vehicle. A virtual image plane is designed according to a projection image observed by the observer inside the vehicle through each of the at least one projection display region. The eyebox plane includes multiple eyebox sub-planes arranged from low to high, and the virtual image plane includes multiple virtual image sub-planes arranged from high to low, where the multiple virtual image sub-planes are in one-to-one correspondence with the multiple eyebox sub-planes. An observation point array is selected on each of the multiple eyebox sub-planes. A virtual image point array is selected on each of the multiple virtual image sub-planes. A connection line connecting a point in the observation point array and a point in the virtual image point array extends through a corresponding projection display region, and an intersection of the connection line and the corresponding projection display region serves as an incident point. Multiple theoretical wedge-angle values of the laminated glass at incident points are calculated according to the projection assembly, the laminated glass, and multiple connection lines. With the multiple theoretical wedge-angle values of the laminated glass at the incident points, no reflected ghosting is observed for the projection image. A first variation curve that the wedge angle varies with the distances from the incident points to the bottom edge of the laminated glass is obtained by fitting the multiple theoretical wedge-angle values and distances from the incident points corresponding to the multiple theoretical wedge-angle values to the bottom edge of the laminated glass. Multiple limiting points are calculated according to the multiple theoretical wedge-angle values and the distances from the incident points corresponding to the multiple theoretical wedge-angle values to the bottom edge of the laminated glass. The multiple limiting points are connected to form a preset region. The first variation curve is adjusted to enable the first variation curve adjusted to have a continuous curve located within the preset region. A wedge-angle value of the laminated glass in each of the at least one projection display region is determined according to the first variation curve adjusted.

### BRIEF DESCRIPTION OF THE DRAWINGS

FIG. 1 is a schematic structural diagram of a head-up display (HUD) system according to an embodiment of the disclosure.
FIG. 2 is a schematic diagram illustrating imaging of a projection image of the HUD system in FIG. 1.
FIG. 3 is a schematic diagram illustrating an actual wedge-angle fitting curve of a projection display region of the HUD system in FIG. 1.
FIG. 4 is a schematic diagram illustrating dynamic observations for a projection image of the HUD system in FIG. 1.
FIG. 5 is a schematic diagram illustrating an actual wedge-angle fitting curve and a preset region of a projection display region of the HUD system in FIG. 4 according to an embodiment.
FIG. 6 is a schematic diagram illustrating an actual wedge-angle fitting curve and a preset region of a projection display region of the HUD system in FIG. 4 according to another embodiment.
FIG. 7 is a schematic diagram illustrating an actual wedge-angle fitting curve and a preset region of a projection display region of the HUD system in FIG. 4 according to another embodiment.
FIG. 8 is a schematic diagram illustrating an actual wedge-angle fitting curve and a preset region of a projection display region of the HUD system in FIG. 4 according to another embodiment.
FIG. 9 is a schematic diagram illustrating an actual wedge-angle fitting curve and a preset region of a projection display region of the HUD system in FIG. 4 according to another embodiment.
FIG. 10 is a schematic structural diagram of a HUD system according to another embodiment of the disclosure.
FIG. 11 is a schematic diagram illustrating projection imaging of the HUD system in FIG. 10.
FIG. 12 is a schematic structural diagram of a HUD system according to another embodiment of the disclosure.
FIG. 13 is a flow chart of a method for designing a HUD system according to an embodiment of the disclosure.
FIG. 14 is a schematic diagram illustrating the method for designing the HUD system in FIG. 13.
FIG. 15 is a schematic diagram illustrating a first variation curve in the method for designing the HUD system in FIG. 13.
FIG. 16 is a schematic diagram illustrating an eyebox plane and a virtual image plane in the method for designing the HUD system in FIG. 14.
FIG. 17 is a schematic diagram illustrating a first variation curve adjusted in the method for designing the HUD system in FIG. 16.
FIG. 18 is a schematic diagram illustrating that the first variation curve adjusted in the method for designing the HUD system in FIG. 17 is further adjusted.
FIG. 19 is a schematic diagram illustrating that the first variation curve adjusted in the method for designing the HUD system in FIG. 18 is further adjusted.
FIG. 20 is a schematic diagram illustrating that the first variation curve adjusted in the method for designing the HUD system in FIG. 19 extends through a seventh limiting point.
FIG. 21 is a schematic diagram illustrating that the first variation curve adjusted in the method for designing the HUD system in FIG. 19 extends through an eighth limiting point.
FIG. 22 is a schematic diagram illustrating that two adjacent first variation curves adjusted for the same type of projection display region in the method for designing the HUD system in FIG. 13.
FIG. 23 is a schematic diagram illustrating two adjacent first variation curves adjusted for different types of projection display regions in the method for designing the HUD system in FIG. 13.
FIG. 24 is a schematic diagram illustrating an observation point array and a virtual image point array in the method for designing a HUD system provided in an embodiment of the disclosure.
FIG. 25 is a diagram illustrating distribution of discrete points of multiple theoretical wedge-angle values in the method for designing the HUD system in FIG. 24, where with the multiple theoretical wedge-angle values, no ghosting is observed when a second virtual image sub-plane is observed from a perpendicular bisector of a second eyebox sub-plane.
FIG. 26 is a diagram illustrating distribution of discrete points of multiple theoretical wedge-angle values in the method for designing the HUD system in FIG. 24, where with the multiple theoretical wedge-angle values, no ghosting is observed when three virtual image sub-planes are observed from perpendicular bisectors of three eyebox sub-planes.

Reference numbers are described as follows:
HUD system 1; laminated glass 10; projection assembly 20; projection display region 11; bottom edge 12; top edge 13; projection light source 21; lower side edge 111; upper side edge 112; zone 113; first projection display region 114; second projection display region 115; projection image 211; first projection light source 212; second projection light source 213; first projection sub-image 2111; second projection sub-image 2112; third projection sub-image 2113; first projection image 2121; second projection image 2131; actual wedge-angle fitting curve L0; first variation curve L10; first variation curve adjusted L11; new first variation curve adjusted L12; eyebox EB; first eyebox EB_S; second eyebox EB_M; third eyebox EB_T; preset region S0; new preset region S1; first limiting point P1; second limiting point P2; third limiting point P3; fourth limiting point P4; fifth limiting point P5; sixth limiting point P6; seventh limiting point G; eighth limiting point P8; first limiting line segment P1-P4; second limiting line segment P2-P3; eyebox plane EB10; eyebox sub-plane EB11; first eyebox sub-plane EB12; second eyebox sub-plane EB13; third eyebox sub-plane EB14; observation point array EB111; first observation point sub-array EB121; second observation point sub-array EB131; third observation point sub-array EB141; virtual image plane TB10; virtual image sub-plane TB11; first virtual image sub-plane TB12; second virtual image sub-plane TB13; third virtual image sub-plane TB14; virtual image point array TB111; first virtual image point sub-array TB121; second virtual image point sub-array TB131; third virtual image point sub-array TB141.

### DETAILED DESCRIPTION

In a first aspect, a head-up display (HUD) system is provided in embodiments of the disclosure. The HUD system includes a laminated glass and a projection assembly. The laminated glass has at least one projection display region. In the case where the laminated glass is mounted to a vehicle, each of the at least one projection display region has a wedge-shaped cross-section in which a thickness of an upper side edge is greater than a thickness of a lower side edge, and has a zone in which a wedge angle decreases in a direction from the lower side edge to the upper side edge, and at each of multiple points within the zone, there are a measured wedge-angle value and multiple theoretical wedge-angle values, where with the multiple theoretical wedge-angle values reflected ghosting is eliminated. An actual wedge-angle fitting curve is obtained by fitting the measured wedge-angle values at the multiple points within the zone, multiple limiting points are calculated according to the multiple theoretical wedge-angle values at each point within the zone and a distance from an incident point corresponding to each of the multiple theoretical wedge-angle values to a bottom edge of the laminated glass, a preset region is formed by sequentially connecting the multiple limiting points, and the actual wedge-angle fitting curve has a continuous curve located within the preset region. The projection assembly includes at least one projection light source capable of projecting light onto the at least one projection display region, wherein projection light emitted by the at least one projection light source is incident onto the at least one projection display region to form a projection image.

A first variation curve is obtained by fitting the multiple theoretical wedge-angle values at each point within the zone, and a maximum deviation value between the actual wedge-angle fitting curve and the first variation curve is less than or equal to 0.15 mrad.

The wedge angle within the zone decreases non-linearly in a direction from the lower side edge to the upper side edge, and both the actual wedge-angle fitting curve and the first variation curve conform to a first to fourth order function.

The HUD system includes a first eyebox, a second eyebox, and a third eyebox which are sequentially arranged from low to high, and the projection image includes a first projection sub-image, a second projection sub-image, and a third projection sub-image which are sequentially arranged from high to low. The preset region is a polygon, and the multiple limiting points include a first limiting point, a second limiting point, a third limiting point, and a fourth limiting point. A first line is obtained by connecting a bottom point of a perpendicular bisector of the first eyebox and a central point of the first projection sub-image, and coordinates of the first limiting point include a distance from an intersection of the first line and the at least one projection display region to the bottom edge of the laminated glass, and a theoretical wedge-angle value through which no reflected ghosting is observed when the central point of the first projection sub-image is observed from the bottom point of the perpendicular bisector of the first eyebox. A second line is obtained by connecting a top point of a perpendicular bisector of the second eyebox and an upper left corner point of the second projection sub-image, and coordinates of the second limiting point include a distance from an intersection of the second line and the at least one projection display region to the bottom edge of the laminated glass, and a theoretical wedge-angle value through which no reflected ghosting is observed when the upper left corner point of the second projection sub-image is observed from the top point of the perpendicular bisector of the second eyebox. A third line is obtained by connecting a top point of a perpendicular bisector of the third eyebox and a central point of the third projection sub-image, and coordinates of the third limiting point include a distance from an intersection of the third line and the at least one projection display region to the bottom edge of the laminated glass, and a theoretical wedge-angle value through which no reflected ghosting is observed when the central point of the third projection sub-image is observed from the top point of the perpendicular bisector of the third eyebox. A fourth line is obtained by connecting a bottom point of the perpendicular bisector of the second eyebox and a lower right corner point of the second projection sub-image, and coordinates of the fourth limiting point include a distance from an intersection of the fourth line and the at least one projection display region to the bottom edge of the laminated glass, and a theoretical wedge-angle value through which no reflected ghosting is observed when the lower right corner point of the second projection sub-image is observed from the bottom point of the perpendicular bisector of the second eyebox.

The multiple limiting points further include a fifth limiting point and a sixth limiting point, and the preset region is formed by sequentially connecting the first limiting point, the fifth limiting point, the second limiting point, the third limiting point, the sixth limiting point, and the fourth limiting point. A fifth line is obtained by connecting a top point of the perpendicular bisector of the first eyebox and the central point of the first projection sub-image, and coordinates of the fifth limiting point include a distance from an intersection of the fifth line and the at least one projection display region to the bottom edge of the laminated glass, and a theoretical wedge-angle value through which no reflected ghosting is observed when the central point of the first projection sub-image is observed from the top point of the perpendicular bisector of the first eyebox. A sixth line is obtained by connecting a bottom point of the perpendicular bisector of the third eyebox and the central point of the third projection sub-image, and coordinates of the sixth limiting point include a distance from an intersection of the sixth line and the at least one projection display region to the bottom edge of the laminated glass, and a theoretical wedge-angle value through which no reflected ghosting is observed when the central point of the third projection sub-image is observed from the bottom point of the perpendicular bisector of the third eyebox.

A first limiting line segment is formed by connecting the first limiting point and the fourth limiting point, a second limiting line segment is formed by connecting the second limiting point and the third limiting point, and the actual wedge-angle fitting curve intersects the first limiting line segment and/or the second limiting line segment.

The actual wedge-angle fitting curve extends through a seventh limiting point, where the seventh limiting point is a centroid of distribution, in a coordinate system where the actual wedge-angle fitting curve is located, of multiple theoretical wedge-angle values through which no reflected ghosting is observed when the second projection sub-image is observed from each point of the perpendicular bisector of the second eyebox.

The actual wedge-angle fitting curve extends through an eighth limiting point, where an eighth line is obtained by connecting a midpoint of the perpendicular bisector of the second eyebox and a central point of the second projection sub-image, and coordinates of the eighth limiting point include a distance from an intersection of the eighth line and the at least one projection display region to the bottom edge of the laminated glass, and a theoretical wedge-angle value through which no reflected ghosting is observed when the central point of the second projection sub-image is observed from the midpoint of the perpendicular bisector of the second eyebox.

In a direction from the bottom edge to a top edge of the laminated glass, a ratio of a length of the zone to a length of the at least one projection display region is not less than 70%.

The at least one projection display region includes at least one first projection display region and at least one second projection display region. The at least one projection light source is configured to project light onto the at least one first projection display region to form a first projection image, and a virtual image distance of the first projection image ranges from 7 meters to 100 meters. The at least one projection light source is configured to project light onto the at least one second projection display region to form a second projection image, and a virtual image distance of the second projection image ranges from 1 meter to 6 meters.

The projection assembly includes at least one first projection light source and at least one second projection light source, where the at least one first projection light source is configured to project light onto the at least one first projection display region, and the at least one second projection light source is configured to project light onto the at least one second projection display region.

In a second aspect, a method for designing a HUD system is further provided in the embodiments of the disclosure. The method for designing the HUD system includes the following. A projection assembly and a laminated glass are provided. Projection light emitted by the projection assembly is incident onto at least one projection display region of the laminated glass. An eyebox plane inside a vehicle is designed according to an observer inside the vehicle. A virtual image plane is designed according to a projection image observed by the observer inside the vehicle through each of the at least one projection display region. The eyebox plane includes multiple eyebox sub-planes arranged from low to high, and the virtual image plane includes multiple virtual image sub-planes arranged from high to low, where the multiple virtual image sub-planes are in one-to-one correspondence with the multiple eyebox sub-planes. An observation point array is selected on each of the multiple eyebox sub-planes. A virtual image point array is selected on each of the multiple virtual image sub-planes. A connection line connecting a point in the observation point array and a point in the virtual image point array extends through a corresponding projection display region, and an intersection of the connection line and the corresponding projection display region serves as an incident point. Multiple theoretical wedge-angle values of the laminated glass at incident points are calculated according to the projection assembly, the laminated glass, and multiple connection lines. With the multiple theoretical wedge-angle values of the laminated glass at the incident points, no reflected ghosting is observed for the projection image. A first variation curve that the wedge angle varies with the distances from the incident points to the bottom edge of the laminated glass is obtained by fitting the multiple theoretical wedge-angle values and distances from the incident points corresponding to the multiple theoretical wedge-angle values to the bottom edge of the laminated glass. Multiple limiting points are calculated according to the multiple theoretical wedge-angle values and the distances from the incident points corresponding to the multiple theoretical wedge-angle values to the bottom edge of the laminated glass. The multiple limiting points are connected to form a preset region. The first variation curve is adjusted to enable the first variation curve adjusted to have a continuous curve located within the preset region. A wedge-angle value of the laminated glass in each of the at least one projection display region is determined according to the first variation curve adjusted.

The first variation curve adjusted conforms to a first to fourth order function and has the continuous curve that decreases non-linearly.

The eyebox plane includes a first eyebox sub-plane, a second eyebox sub-plane, and a third eyebox sub-plane which are sequentially arranged from low to high. The virtual image plane includes a first virtual image sub-plane, a second virtual image sub-plane, and a third virtual image sub-plane which are sequentially arranged from high to low. The preset region is a polygon, and the multiple limiting points include a first limiting point, a second limiting point, a third limiting point, and a fourth limiting point. The multiple limiting points are calculated according to the multiple theoretical wedge-angle values and the distances from the incident points corresponding to the multiple theoretical wedge-angle values to the bottom edge of the laminated glass as follows. A first line is obtained by connecting a bottom point of a perpendicular bisector of the first eyebox sub-plane and a central point of the first virtual image sub-plane, where the first line intersects the at least one projection display region at a first incident point. A second line is obtained by connecting a top point of a perpendicular bisector of the second eyebox sub-plane and an upper left corner point of the second virtual image sub-plane, where the second line intersects the at least one projection display region at a second incident point. A third line is obtained by connecting a top point of a perpendicular bisector of the third eyebox sub-plane and a central point of the third virtual image sub-plane, where the third line intersects the at least one projection display region at a third incident point. A fourth line is obtained by connecting a bottom point of the perpendicular bisector of the second eyebox sub-plane and a lower right corner point of the second virtual image sub-plane, where the fourth line intersects the at least one projection display region at a fourth incident point. A first limiting theoretical wedge-angle value at the first incident point, through which no reflected ghosting is observed, is calculated according to the projection assembly, the laminated glass, and the first line. A second limiting theoretical wedge-angle value at the second incident point, through which no reflected ghosting is observed, is calculated according to the projection assembly, the laminated glass, and the second line. A third limiting theoretical wedge-angle value at the third incident point, through which no reflected ghosting is observed, is calculated according to the projection assembly, the laminated glass, and the third line. A fourth limiting theoretical wedge-angle value at the fourth incident point, through which no reflected ghosting is observed, is calculated according to the projection assembly, the laminated glass, and the fourth line. The first limiting point is obtained according to the first limiting theoretical wedge-angle value and a distance from the first incident point to the bottom edge of the laminated glass. The second limiting point is obtained according to the second limiting theoretical wedge-angle value and a distance from the second incident point to the bottom edge of the laminated glass. The third limiting point is obtained according to the third limiting theoretical wedge-angle value and a distance from the third incident point to the bottom edge of the laminated glass. The fourth limiting point is obtained according to the fourth limiting theoretical wedge-angle value and a distance from the fourth incident point to the bottom edge of the laminated glass.

After "obtaining the first limiting point according to the first limiting theoretical wedge-angle value and the distance from the first incident point to the bottom edge of the laminated glass, obtaining the second limiting point according to the second limiting theoretical wedge-angle value and the distance from the second incident point to the bottom edge of the laminated glass, obtaining the third limiting point according to the third limiting theoretical wedge-angle value and the distance from the third incident point to the bottom edge of the laminated glass, and obtaining the fourth limiting point according to the fourth limiting theoretical wedge-angle value and the distance from the fourth incident point to the bottom edge of the laminated glass", "calculating the multiple limiting points according to the multiple theoretical wedge-angle values and the distances from the incident points corresponding to the multiple theoretical wedge-angle values to the bottom edge of the laminated glass" further includes the following. A fifth line is obtained by connecting a top point of the perpendicular bisector of the first eyebox sub-plane and the central point of the first virtual image sub-plane, where the fifth line intersects the at least one projection display region at a fifth incident point. A sixth line is obtained by connecting a bottom point of the perpendicular bisector of the third eyebox sub-plane and the central point of the third virtual image sub-plane, where the sixth line intersects the at least one projection display region at a sixth incident point. A fifth limiting theoretical wedge-angle value at the fifth incident point, through which no reflected ghosting is observed, is calculated according to the projection assembly, the laminated glass, and the fifth line. A sixth limiting theoretical wedge-angle value at the sixth incident point, through which no reflected ghosting is observed, is calculated according to the projection assembly, the laminated glass, and the sixth line. The fifth limiting point is obtained according to the fifth limiting theoretical wedge-angle value and a distance from the fifth incident point to the bottom edge of the laminated glass. The sixth limiting point is and obtained according to the sixth limiting theoretical wedge-angle value and a distance from the sixth incident point to the bottom edge of the laminated glass. Vertexes of the preset region further include the fifth limiting point and the sixth limiting point, where the preset region is formed by sequentially connecting the first limiting point, the fifth limiting point, the second limiting point, the third limiting point, the sixth limiting point, and the fourth limiting point.

A first limiting line segment is formed by connecting the first limiting point and the fourth limiting point, a second limiting line segment is formed by connecting the second limiting point and the third limiting point, and "adjusting the first variation curve to enable the first variation curve adjusted to have the continuous curve located within the preset region" includes the following. The first variation curve is adjusted to enable the first variation curve adjusted to have the continuous curve located within the preset region, and to enable the first variation curve adjusted to intersect the first limiting line segment and/or the second limiting line segment.

The multiple limiting points are calculated according to the multiple theoretical wedge-angle values and the distances from the incident points corresponding to the multiple theoretical wedge-angle values to the bottom edge of the laminated glass as follows. Multiple seventh lines are obtained by connecting observation points on the perpendicular bisector of the second eyebox sub-plane and virtual image points on the second virtual image sub-plane, where the multiple seventh lines intersect the at least one projection display region at multiple seventh incident points. Multiple seventh limiting theoretical wedge-angle values at the multiple seventh incident points, through which no reflected ghosting is observed, are calculated according to the projection assembly, the laminated glass, and the multiple seventh lines. A distribution of discrete points is obtained according to the multiple seventh limiting theoretical wedge-angle values and distances from the multiple seventh incident points to the bottom edge of the laminated glass. A seventh limiting point is obtained by calculating a centroid of the distribution of the discrete points. The first variation curve is adjusted to enable the first variation curve adjusted to have the continuous curve located within the preset region as follows. The first variation curve is adjusted to enable the first variation curve adjusted to have the continuous curve located within the preset region, and to enable the first variation curve adjusted to extend through the seventh limiting point.

The multiple limiting points are calculated according to the multiple theoretical wedge-angle values and the distances from the incident points corresponding to the multiple theoretical wedge-angle values to the bottom edge of the laminated glass as follows. An eighth line is obtained by connecting a midpoint of the perpendicular bisector of the second eyebox sub-plane and a central point of the second virtual image sub-plane, where the eighth line intersects the at least one projection display region at an eighth incident point. An eighth limiting theoretical wedge-angle value at the eighth incident point, through which no reflected ghosting is observed, is calculated according to the projection assembly, the laminated glass, and the eighth line. An eighth limiting point is obtained according to the eighth limiting theoretical wedge-angle value and a distance from the eighth incident point to the bottom edge of the laminated glass. The first variation curve is adjusted to enable the first variation curve adjusted to have the continuous curve located within the preset region as follows. The first variation curve is adjusted to enable the first variation curve adjusted to have the continuous curve located within the preset region, and to enable the first variation curve adjusted to extend through the eighth limiting point.

A ratio of a maximum local range ΔW of the multiple theoretical wedge-angle values to a global range ΔC of the multiple theoretical wedge-angle values is: ΔW/ΔC ≤ 0.9.

The at least one projection display region includes at least two first projection display regions or at least two second projection display regions, at least two first variation curves adjusted that the wedge angle varies with distances from incident points to the bottom edge of the laminated glass are obtained through fitting, where when a maximum deviation value between two adjacent first variation curves adjusted is greater than 0.15 mrad, after "determining the wedge-angle value of the laminated glass in each of the at least one projection display region according to the first variation curve adjusted", the method further includes the following. A distance between the eyebox plane and a virtual image plane corresponding to one of the two adjacent first variation curves adjusted is adjusted. Multiple new theoretical wedge-angle values are recalculated out. A new first variation curve, that the wedge angle varies with the distances from the incident points to the bottom edge of the laminated glass, is obtained by fitting the multiple new theoretical wedge-angle values and distances from incident points corresponding to the multiple new theoretical wedge-angle values to the bottom edge of the laminated glass. A new preset region is recalculated out. The new first variation curve is adjusted to enable the new first variation curve adjusted to have a continuous curve located within the new preset region. Whether a maximum deviation value between the new first variation curve adjusted and another one of the two adjacent first variation curves adjusted is less than or equal to 0.15 mrad is judged. If not, above operations are repeated. If yes, wedge-angle values of the laminated glass, in each of the at least two first projection display regions or each of the at least two second projection display regions, are determined according to the new first variation curve adjusted.

The at least one projection display region includes at least two first projection display regions or at least two second projection display regions, at least two first variation curves adjusted that the wedge angle varies with distances from incident points to the bottom edge of the laminated glass are obtained through fitting, where when a maximum deviation value between two adjacent first variation curves adjusted is greater than 0.2 mrad, after "determining the wedge-angle value of the laminated glass in each of the at least one projection display region according to the first variation curve adjusted", the method further the following. A distance between the eyebox plane and a virtual image plane corresponding to one of the two adjacent first variation curves adjusted is adjusted. Multiple new theoretical wedge-angle values are recalculated out. A new first variation curve, that the wedge angle varies with the distances from the incident points to the bottom edge of the laminated glass, is obtained by fitting the multiple new theoretical wedge-angle values and distances from incident points corresponding to the multiple new theoretical wedge-angle values to the bottom edge of the laminated glass. A new preset region is recalculated out. The new first variation curve is adjusted to enable the new first variation curve adjusted to have a continuous curve located within the new preset region. Whether a maximum deviation value between the new first variation curve adjusted and another one of the two adjacent first variation curves adjusted is less than or equal to 0.2 mrad is judged. If not, above operations are repeated. If yes, wedge-angle values of the laminated glass, in each of the at least two first projection display regions or each of the at least two second projection display regions, are determined according to the new first variation curve adjusted.

A ratio of a maximum local range ΔWU in a set of multiple adjusted theoretical wedge-angle values to a global range ΔCU in the set of the multiple adjusted theoretical wedge-angle values is: ΔWU/ΔCU ≤ 0.9.

The terms such as "first" and "second" used in the specification, the claims, and the accompany drawings of the disclosure are used for distinguishing between different objects rather than describing a particular order. The terms "include", "comprise", and "have" as well as variations thereof are intended to cover non-exclusive inclusion. For example, a process, system, product, or apparatus including a series of steps or units is not limited to the listed steps or units, it can optionally include other operations or units that are not listed; alternatively, other operations or units inherent to the process, product, or device can be included either.

The term "embodiment" referred to herein means that a particular feature, structure, or feature described in connection with the embodiment may be contained in at least one embodiment of the disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

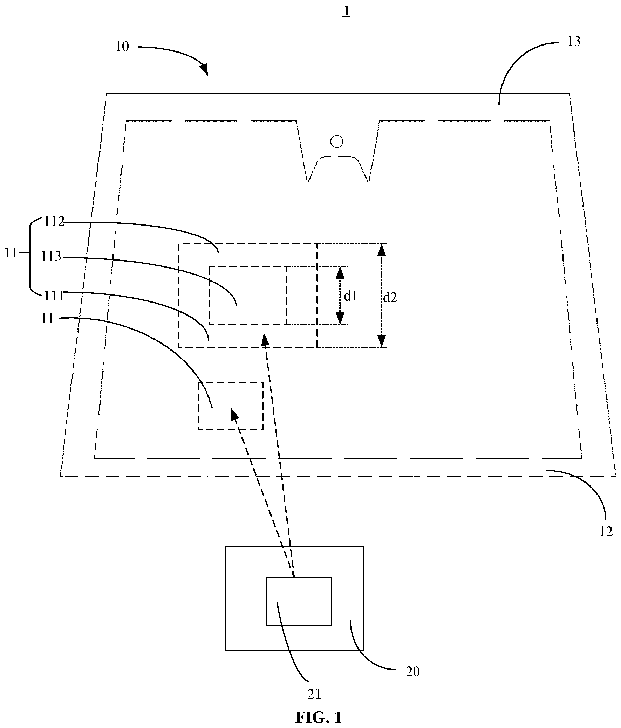

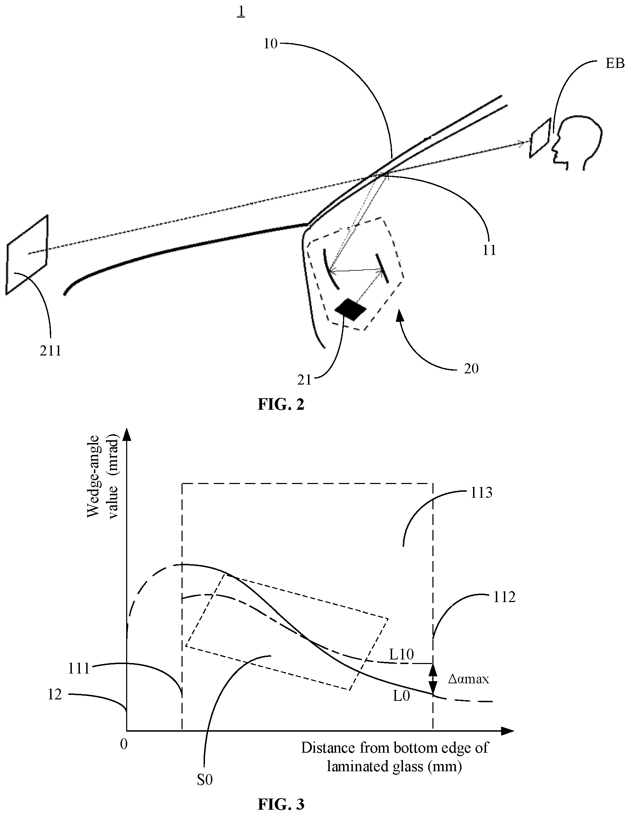

Referring to FIGS. 1 to 3, FIG. 1 is a schematic structural diagram of a HUD system according to an embodiment of the disclosure, FIG. 2 is a schematic diagram illustrating imaging of a projection image of the HUD system in FIG. 1, and FIG. 3 is a schematic diagram illustrating an actual wedge-angle fitting curve of a projection display region of the HUD system in FIG. 1. In this embodiment, the HUD system 1 includes a laminated glass 10 and a projection assembly 20. The laminated glass 10 has at least one projection display region 11. In the case where the laminated glass 10 is mounted to a vehicle, each of the at least one projection display region 11 has a wedge-shaped cross-section in which a thickness of an upper side edge 112 is greater than a thickness of a lower side edge 111, and has a zone 113 in which a wedge angle decreases in a direction from the lower side edge 111 to the upper side edge 112. At each of multiple points within the zone 113, there are a measured wedge-angle value and multiple theoretical wedge-angle values, where with the multiple theoretical wedge-angle values reflected ghosting is eliminated. An actual wedge-angle fitting curve L0 is obtained by fitting the measured wedge-angle values at the multiple points within the zone 113. Multiple limiting points are calculated according to the multiple theoretical wedge-angle values at each point within the zone 113 and a distance from an incident point corresponding to each of the multiple theoretical wedge-angle values to a bottom edge of the laminated glass 10, a preset region is formed by sequentially connecting the multiple limiting points. The actual wedge-angle fitting curve L0 has a continuous curve located within the preset region S0. The projection assembly 20 includes at least one projection light source 21 capable of projecting light onto the at least one projection display region 11, where projection light emitted by the at least one projection light source 21 is incident onto the at least one projection display region 11 to form a projection image 211.

In this embodiment, each projection display region 11 has the zone 113 in which the wedge angle monotonically and nonlinearly decreases in the direction from the lower side edge 111 to the upper side edge 112. It may be understood that the wedge angle in other zones, other than the zone 113, of the projection display region 11, may be equal to zero, a constant angle, linearly/nonlinearly increase or linearly/nonlinearly decrease, or decrease along with the wedge angle in the zone 113.

In this embodiment, the HUD system 1 is used for information display on a front windshield of a vehicle. The HUD system 1 includes the projection assembly 20. An image projected by the projection assembly 20 onto the at least one projection display region 11 includes at least one of HUD images with one or more types, HUD images with one or more angles, and HUD images with one or more display distances, so that the HUD system 1 has multiple information displays, increasing the richness of the image display of the HUD system 1. The at least one projection display region 11 is used for displaying of HUD images. Specifically, the multiple projection display regions 11 may be used for an augmented-reality head-up display (AR-HUD) or a windshield head-up display (W-HUD), etc.

In this embodiment, the projection assembly 20 includes at least one projection light source 21 for projecting onto the at least one projection display region 11. One projection light source 21 is provided for one projection display region 11, or one projection light source 21 is provided for multiple projection display regions 11. In one embodiment, the projection light emitted by the projection light source 21 may directly enter the projection display region 11. In another embodiment, the projection light emitted by the projection assembly 20 may be incident onto the projection display region 11 through a reflection device.

In this embodiment, the wedge angle of the laminated glass 10 in the at least one projection display region 11 is used for eliminating reflected ghosting when light emitted by the projection assembly 20 is incident onto the at least one projection display region 11 to form the projection image 211. Specifically, the laminated glass 10 is exemplified as being applied to a vehicle. When the projection assembly 20 projects the projection light forming the projection image 211 onto the projection display region 11, due to the thickness of the laminated glass 10, there is reflected ghosting (also referred to as secondary images) between an image of the projection light that is reflected onto an eyebox EB inside a cabin by one side of the laminated glass 10 inside the vehicle, and an image of the projection light that is reflected onto the eyebox EB by another side of the laminated glass 10 outside the vehicle. In the case where the laminated glass 10 further has a high-reflection dielectric layer, such as a metal coating containing Ag or a modified polyethylene terephthalate (PET) with high reflectivity, multiple reflected ghosting images may also occur due to reflections. Therefore, it is required to make the laminated glass 10 have a certain wedge-angle value in the projection display region 11, to make the image of the projection light that is reflected onto the eyebox EB inside the cabin by the one side of the laminated glass 10 inside the vehicle coincide with and the image of the projection light that is reflected onto the eyebox EB by the another side of the laminated glass 10 outside the vehicle, so that reflected ghosting can be eliminated, thereby eliminating reflected ghosting when an observer observes the projection image 211 through the projection display region 11. The eyebox EB refers to a position of eyes of the driver inside the cabin.

Since the projection light forming the projection image 211 will have different angles after being reflected by different zones of the projection display region 11, the laminated glass 10 requires different wedge-angle values in different zones of the projection display region 11, to ensure minimal or no ghosting when observed from the eyebox EB at the same position through different zones of the projection display region 11.

When the vehicle is driving on sloped or uneven surfaces, the vehicle will experience a certain degree of bumpiness, causing a height of the eyebox EB relative to the ground to dynamically change. This results in dynamic changes in intersections of the projection light of the projection image 211 entering the eyebox EB and the projection display region 11, leading to overall dynamic ghosting. Additionally, during an actual manufacturing process of the laminated glass 10, the wedge-angle curve of an intermediate wedge-shaped PVB film is not desirably smooth, and local fluctuations may cause uneven distribution of ghosting of the projection image 211, resulting in ghosting or aggravated ghosting (i.e., local dynamic ghosting) when observed from the eyebox EB through the projection display region 11. Therefore, the laminated glass 10 requires different wedge-angle values in different zones of the projection display region 11, to ensure minimal or no reflected ghosting is observed when the projection image 211 is dynamically observed from the eyebox EB at different positions.

In the related art, a wedge-angle variation of the laminated glass 10 in the projection display region is simply designed by splicing several wedge-angle values in linear segments or performing a simple arc transition at bends of the spliced linear segments, which cannot meet the ghosting elimination requirements in multiple zones of the projection display region 11 for HUD images, nor can it meet the dynamic ghosting elimination requirements in the same zone within the projection display region 11.

In this embodiment (referring to FIG. 3), in the case where the laminated glass 10 is mounted to the vehicle, each projection display region 11 has a wedge-shaped cross-section in which the thickness of the upper side edge 112 is greater than the thickness of the lower side edge 111 and the wedge angle decreases in a direction from the lower side edge 111 to the upper side edge 112. In FIG. 3, L0 represents an actual fitting curve that the wedge angle of the laminated glass 10 in one projection display region 11 varies with a distance to the bottom edge 12 of the laminated glass 10. The wedge angle of the laminated glass 10 corresponding to each projection display region 11 decreases from the direction from the lower side edge 111 to the upper side edge 112, thereby reducing or even eliminating ghosting of HUD images in each projection display region 11.

Specifically, the actual wedge-angle fitting curve L0 has a continuous curve located within the preset region S0. The preset region S0 is a region of overlap between a distribution region of discrete points of multiple theoretical wedge-angle values through which no ghosting is observed when a central point of the projection image 211 is observed from the eyebox EB at different heights, and a distribution region of discrete points of multiple theoretical wedge-angle values through which no ghosting is observed when the entire projection image 211 is observed from the eyebox EB at a specific height. Therefore, there is a minimal deviation between actual wedge-angle values, corresponding to the continuous curve of the actual wedge-angle fitting curve L0 located within the preset region S0, and the theoretical wedge-angle values through which no ghosting is observed when the central point of the projection image 211 is observed from the eyebox EB at different heights, and there is a minimal deviation between actual wedge-angle values, corresponding to the continuous curve of the actual wedge-angle fitting curve L0 located within the preset region S0, and the theoretical wedge-angle values through which no ghosting is observed when the entire projection image 211 is observed from the eyebox EB at a specific height. In other words, minimal or no ghosting is observed when the central point of the projection image 211 is observed from the eyebox EB at different heights, and minimal or no ghosting is observed when the entire projection image 211 is observed from the eyebox EB at a specific height. Generally, image information at the central point of the projection image 211 is of higher importance, and thus, by reducing or even eliminating reflected ghosting at the central point of the projection image 211 during dynamic observation, it is possible to effectively reduce or eliminate local dynamic ghosting at the central point of the projection image 211 and minimize the adverse impact of overall dynamic ghosting on information transmission.

Compared to the related art, the HUD system 1 is provided in the embodiments of the disclosure. The HUD system 1 includes the laminated glass 10 and the projection assembly 20. Within the projection display region 11, the laminated glass 10 has a wedge-shaped cross-section in which the thickness of the upper side edge 112 is greater than the thickness of the lower side edge 111, and has the zone 113 in which the wedge angle monotonically and nonlinearly decreases in the direction from the lower side edge 111 to the upper side edge 112. The actual wedge-angle fitting curve L0 may be obtained by fitting measured wedge-angle values at various points within the zone 113, and have the continuous curve located within the preset region S0. As such, the continuous curve can align with a line formed by connecting multiple theoretical wedge-angle values of the projection display region 11, where with the multiple theoretical wedge-angle values no reflected ghosting is observed when the central point of the projection image 211 is observed during dynamic changes. This can reduce or even eliminate ghosting in the HUD image obtained through the projection display region 11, thereby improving the quality of the HUD image projected onto the laminated glass 10. This also aids the driver in dynamically observing the HUD image during driving of the vehicle, enhancing driving safety and comfort. The HUD system 1 provided in the disclosure can reduce or even eliminate ghosting in the HUD image that is dynamically observed from multiple positions.

Referring again to FIGS. 1 and 3, in this embodiment, a first variation curve L10 is obtained by fitting the multiple theoretical wedge-angle values at each point within the zone 113, and a maximum deviation value Δαmax between the actual wedge-angle fitting curve L0 and the first variation curve L10 is less than or equal to 0.15 mrad.

In this embodiment, the first variation curve L10 is obtained by fitting multiple theoretical wedge-angle values through which no reflected ghosting is observed when the projection image 211 is observed from the eyebox EB at a specific position. The maximum deviation value Δαmax between the actual wedge-angle fitting curve L0 and the first variation curve L10 is less than or equal to 0.15 mrad, which not only ensures that minimal or no reflected ghosting is observed when the projection image 211 is observed from the eyebox EB at a specific position, but also ensures that minimal or no reflected ghosting is observed when the central point of the projection image 211 is dynamically observed from the eyebox EB.

Referring again to FIGS. 1 and 3, in this embodiment, the wedge angle within the zone 113 decreases non-linearly in the direction from the lower side edge 111 to the upper side edge 112, and both the actual wedge-angle fitting curve L0 and the first variation curve L10 conform to a first to fourth order function.

In this embodiment, both the actual wedge-angle fitting curve L0 and the first variation curve L10 conform to a first-to-fourth order function, which ensures that the actual wedge-angle fitting curve L0 is smooth throughout, thereby preventing local abrupt changes in wedge-angle values that would exacerbate reflected ghosting.

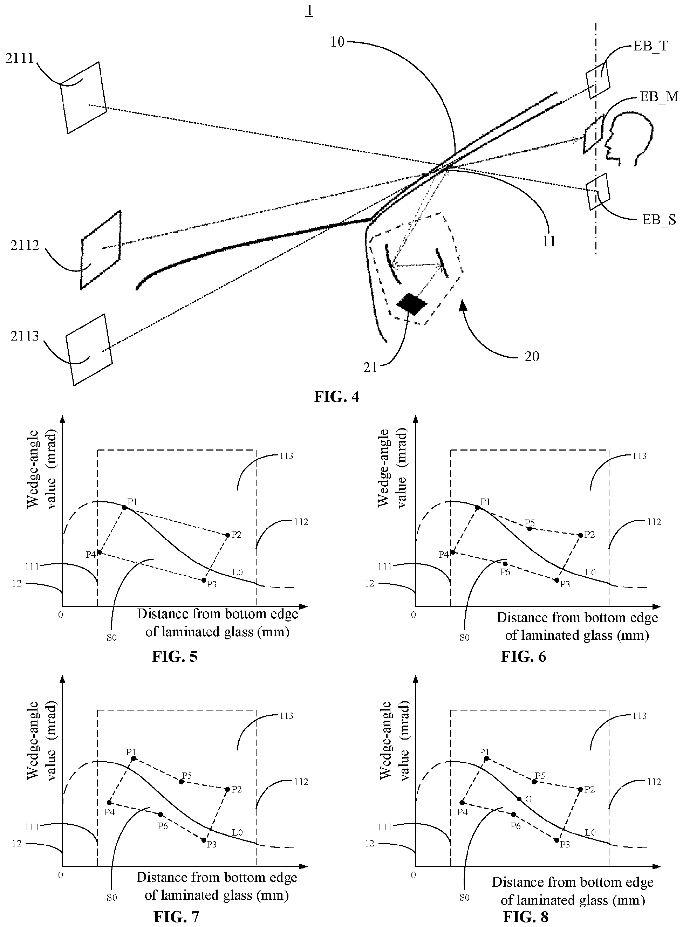

Referring to FIG. 4 and FIG. 5, FIG. 4 is a schematic diagram illustrating dynamic observations for a projection image of the HUD system in FIG. 1, FIG. 5 is a schematic diagram illustrating an actual wedge-angle fitting curve and a preset region of a projection display region of the HUD system in FIG. 4 according to an embodiment. In this embodiment, the HUD system 1 includes a first eyebox EB_S, a second eyebox EB_M, and a third eyebox EB_T which are sequentially arranged from low to high. The projection image 211 includes a first projection sub-image 2111, a second projection sub-image 2112, and a third projection sub-image 2113 which are sequentially arranged from high to low. The preset region S0 is a polygon. The multiple limiting points include a first limiting point P1, a second limiting point P2, a third limiting point P3, and a fourth limiting point P4. A first line is obtained by connecting a bottom point of a perpendicular bisector of the first eyebox EB_S and a central point of the first projection sub-image 2111, and coordinates of the first limiting point P1 include a distance from an intersection of the first line and the at least one projection display region 11 to the bottom edge of the laminated glass, and a theoretical wedge-angle value through which no reflected ghosting is observed when the central point of the first projection sub-image 2111 is observed from the bottom point of the perpendicular bisector of the first eyebox EB_S. A second line is obtained by connecting a top point of a perpendicular bisector of the second eyebox EB_M and an upper left corner point of the second projection sub-image 2112, and coordinates of the second limiting point P2 include a distance from an intersection of the second line and the at least one projection display region 11 to the bottom edge of the laminated glass, and a theoretical wedge-angle value through which no reflected ghosting is observed when the upper left corner point of the second projection sub-image 2112 is observed from the top point of the perpendicular bisector of the second eyebox EB_M. A third line is obtained by connecting a top point of a perpendicular bisector of the third eyebox EB_T and a central point of the third projection sub-image 2113, and coordinates of the third limiting point P3 include a distance from an intersection of the third line and the at least one projection display region 11 to the bottom edge of the laminated glass, and a theoretical wedge-angle value through which no reflected ghosting is observed when the central point of the third projection sub-image 2113 is observed from the top point of the perpendicular bisector of the third eyebox EB_T. A fourth line is obtained by connecting a bottom point of the perpendicular bisector of the second eyebox EB_M and a lower right corner point of the second projection sub-image 2112, and coordinates of the fourth limiting point P4 include a distance from an intersection of the fourth line and the at least one projection display region 11 to the bottom edge of the laminated glass, and a theoretical wedge-angle value through which no reflected ghosting is observed when the lower right corner point of the second projection sub-image 2112 is observed from the bottom point of the perpendicular bisector of the second eyebox.

In this embodiment, the first eyebox EB_S, the second eyebox EB_M, and the third eyebox EB_T represent positions, of the eyes of the driver inside the cabin of the vehicle, at different heights from the ground, respectively. The second eyebox EB_M represents a position of the eyes of the driver at the normal height when the vehicle is not experiencing any jolts. Correspondingly, when the projection image 211 is observed from the eyebox EB at different heights through the projection display region 11, the projection image 211 will be presented at different heights at one side of the laminated glass 10 facing away from the eyebox EB. Specifically, the first projection sub-image 2111 may be observed by the first eyebox EB_S, the second projection sub-image 2112 may be observed by the second eyebox EB_M, and the third projection sub-image 2113 may be observed by the third eyebox EB_T.

In this embodiment, the preset region S0 may be quadrilateral. The preset region S0 is formed by sequentially connecting the first limiting point P1, the second limiting point P2, the third limiting point P3, and the fourth limiting point P4. Specifically, the preset region S0 and the actual wedge-angle fitting curve L0 are in the same coordinate system, with the horizontal axis representing a distance from the bottom edge 12 of the laminated glass 10 and the vertical axis representing a wedge-angle value.

The horizontal coordinate of the first limiting point P1 is the distance from the intersection of the first line and the projection display region 11 to the bottom edge 12 of the laminated glass 10. The vertical coordinate of the first limiting point P1 is the theoretical wedge-angle value through which no reflected ghosting is observed when the central point of the first projection sub-image 2111 is observed from the bottom point of the perpendicular bisector of the first eyebox EB_S.

According to the characteristics of projection imaging, at the first eyebox EB_S, as an observation point, from which the central point of the first projection sub-image 2111 is observed, moves in a direction from the bottom point of the perpendicular bisector of the first eyebox EB_S to a top point of the perpendicular bisector of the first eyebox EB_S, a distance from an intersection, of a line connecting the observation point and the central point of the first projection sub-image 2111 and the projection display region 11, to the bottom edge 12 of the laminated glass 10 increases, and the theoretical wedge-angle value required to eliminate reflected ghosting decreases. Therefore, in the coordinate system of the actual wedge-angle fitting curve L0, a distribution of discrete points of the theoretical wedge-angle values, through which no reflected ghosting is observed when the central point of the first projection sub-image 2111 is observed along the perpendicular bisector of the first eyebox EB_S, is located at the lower right of the first limiting point P1.

The horizontal coordinate of the second limiting point P2 is the distance from the intersection of the second line and the projection display region 11 to the bottom edge 12 of the laminated glass 10. The vertical coordinate of the second limiting point P2 is the theoretical wedge-angle value through which no reflected ghosting is observed when the upper left corner point of the second projection sub-image 2112 is observed from the top point of the perpendicular bisector of the second eyebox EB_M.

According to the characteristics of projection imaging, at the second eyebox EB_M, as an observation point, from which the upper left corner point of the second projection sub-image 2112 is observed, moves in a direction from the top point of the perpendicular bisector of the second eyebox EB_M to the bottom point of the perpendicular bisector of the second eyebox EB_M, a distance from an intersection, of a line connecting the observation point and the upper left corner point of the second projection sub-image 2112 and the projection display region 11, to the bottom edge 12 of the laminated glass 10 decreases, and the theoretical wedge-angle value required to eliminate reflected ghosting increases. Therefore, in the coordinate system of the actual wedge-angle fitting curve L0, a distribution of discrete points of the theoretical wedge-angle values, through which no reflected ghosting is observed when the upper left corner point of the second projection sub-image 2112 is observed along the perpendicular bisector of the second eyebox EB_M, is located at the upper left of the second limiting point P2. Additionally, a distribution of discrete points of the theoretical wedge-angle values, through which no reflected ghosting is observed when the central point of the second projection sub-image 2112 is observed along the perpendicular bisector of the second eyebox EB_M, is also located at the upper left of the second limiting point P2.

The horizontal coordinate of the third limiting point P3 is the distance from the intersection of the third line and the projection display region 11 to the bottom edge 12 of the laminated glass 10. The vertical coordinate of the third limiting point P3 is the theoretical wedge-angle value through which no reflected ghosting is observed when the central point of the third projection sub-image 2113 is observed from the top point of the perpendicular bisector of the third eyebox EB_T.

According to the characteristics of projection imaging, at the third eyebox EB_T, as an observation point, from which the central point of the third projection sub-image 2113 moves in a direction from the top point of the perpendicular bisector of the third eyebox EB_T to a bottom point of the perpendicular bisector of the third eyebox EB_T, a distance from an intersection, of a line connecting the observation point and the central point of the third projection sub-image 2113 and the projection display region 11, to the bottom edge 12 of the laminated glass 10 decreases, and the theoretical wedge-angle value required to eliminate reflected ghosting increases. Therefore, in the coordinate system of the actual wedge-angle fitting curve L0, a distribution of discrete points of the theoretical wedge-angle values, through which no reflected ghosting is observed when the central point of the third projection sub-image 2113 is observed along the perpendicular bisector of the third eyebox EB_T, is located at the upper left of the third limiting point P3.

The horizontal coordinate of the fourth limiting point P4 is the distance from the intersection of the fourth line and the projection display region 11 to the bottom edge 12 of the laminated glass 10. The vertical coordinate of the fourth limiting point P4 is the theoretical wedge-angle value through which no reflected ghosting is observed when the lower right corner point of the second projection sub-image 2112 is observed from the bottom point of the perpendicular bisector of the second eyebox EB_M.

According to the characteristics of projection imaging, at the second eyebox EB_M, as an observation point, from which the lower right corner point of the second projection sub-image 2112 is observed, moves in a direction from the bottom point of the perpendicular bisector of the second eyebox EB_M to the top point of the perpendicular bisector of the second eyebox EB_M, a distance from an intersection, of a line connecting the observation point and the lower right corner point of the second projection sub-image 2112 and the projection display region 11, to the bottom edge 12 of the laminated glass 10 increases, and the theoretical wedge-angle value required to eliminate reflected ghosting decreases. Therefore, in the coordinate system of the actual wedge-angle fitting curve L0, a distribution of discrete points of the theoretical wedge-angle values, through which no reflected ghosting is observed when the lower right corner point of the second projection sub-image 2112 is observed along the perpendicular bisector of the second eyebox EB_M, is located at the lower right of the fourth limiting point P4. Additionally, a distribution of discrete points of the theoretical wedge-angle values, through which no reflected ghosting is observed when the central point of the second projection sub-image 2112 is observed along the perpendicular bisector of the second eyebox EB_M, is also located at the lower right of the fourth limiting point P4.

Therefore, the preset region S0, formed by sequentially connecting the first limiting point P1, the second limiting point P2, the third limiting point P3, and the fourth limiting point P4, includes a distribution of multiple theoretical wedge-angle values through which no reflected ghosting is observed when the central point of the projection image 211 is observed from different points on the perpendicular bisector of the first eyebox EB_S, a distribution of multiple theoretical wedge-angle values through which no reflected ghosting is observed when the central point of the projection image 211 is observed from different points on the perpendicular bisector of the second eyebox EB_M, and a distribution of multiple theoretical wedge-angle values through which no reflected ghosting is observed when the central point of the projection image 211 is observed from different points on the perpendicular bisector of the third eyebox EB_T. Therefore, there is a minimal deviation between the continuous curve of the actual wedge-angle fitting curve L0 located within the preset region S0 and the theoretical wedge-angle values through which no reflected ghosting is observed when the central point of the projection image 211 is dynamically observed along the perpendicular bisector of the eyebox EB. That is, with the aid of the wedge angle of the projection display region 11, reflected ghosting can be reduced or eliminated when dynamically observing the central point of the projection image 211.

Referring to FIG. 4 and FIG. 6, FIG. 6 is a schematic diagram illustrating the actual wedge-angle fitting curve and the preset region of the projection display region of the HUD system in FIG. 4 according to another embodiment. In this embodiment, the multiple limiting points further include a fifth limiting point P5 and a sixth limiting point P6, and the preset region S0 is formed by sequentially connecting the first limiting point P1, the fifth limiting point P5, the second limiting point P2, the third limiting point P3, the sixth limiting point P6, and the fourth limiting point P4. A fifth line is obtained by connecting the top point of the perpendicular bisector of the first eyebox EB_S and the central point of the first projection sub-image 2111, and coordinates of the fifth limiting point P5 include a distance from an intersection of the fifth line and the at least one projection display region 11 to the bottom edge of the laminated glass 10, and a theoretical wedge-angle value through which no reflected ghosting is observed when the central point of the first projection sub-image 2111 is observed from the top point of the perpendicular bisector of the first eyebox EB_S. A sixth line is obtained by connecting a bottom point of the perpendicular bisector of the third eyebox EB_T and the central point of the third projection sub-image 2113, and coordinates of the sixth limiting point P6 include a distance from an intersection of the sixth line and the at least one projection display region 11 to the bottom edge of the laminated glass 10, and a theoretical wedge-angle value through which no reflected ghosting is observed when the central point of the third projection sub-image 2113 is observed from the bottom point of the perpendicular bisector of the third eyebox EB_T.

In this embodiment, the preset region S0 is hexagonal, and formed by sequentially connecting the first limiting point P1, the fifth limiting point P5, the second limiting point P2, the third limiting point P3, the sixth limiting point P6, and the fourth limiting point P4. Specifically, the preset region S0 and the actual wedge-angle fitting curve L0 are in the same coordinate system, with the horizontal axis representing a distance from the bottom edge 12 of the laminated glass 10 and the vertical axis representing a wedge-angle value.

The horizontal coordinate of the fifth limiting point P5 is the distance from the intersection of the fifth line and the projection display region 11 to the bottom edge 12 of the laminated glass 10. The vertical coordinate of the fifth limiting point P5 is the theoretical wedge-angle value through which no reflected ghosting is observed when the central point of the first projection sub-image 2111 is observed from the top point of the perpendicular bisector of the first eyebox EB_S.

According to the characteristics of projection imaging, at the first eyebox EB_S, as an observation point, from which the central point of the first projection sub-image 2111 is observed, moves in a direction from the top point of the perpendicular bisector of the first eyebox EB_S to the bottom point of the perpendicular bisector of the first eyebox EB_S, a distance from an intersection, of a line connecting the observation point and the central point of the first projection sub-image 2111 and the projection display region 11, to the bottom edge 12 of the laminated glass 10 decreases, and the theoretical wedge-angle value required to eliminate reflected ghosting increases. Therefore, in the coordinate system of the actual wedge-angle fitting curve L0, a distribution of discrete points of the theoretical wedge-angle values, through which no reflected ghosting is observed when the central point of the first projection sub-image 2111 is observed along the perpendicular bisector of the first eyebox EB_S, is located at the upper left of the fifth limiting point P5.

The horizontal coordinate of the sixth limiting point P6 is the distance from the intersection of the sixth line and the projection display region 11 to the bottom edge 12 of the laminated glass 10. The vertical coordinate of the sixth limiting point P6 is the theoretical wedge-angle value through which no reflected ghosting is observed when the central point of the third projection sub-image 2113 is observed from the bottom point of the perpendicular bisector of the third eyebox EB_T.

According to the characteristics of projection imaging, at the third eyebox EB_T, as an observation point, from which the central point of the third projection sub-image 2113 is observed, moves in a direction from the bottom point of the perpendicular bisector of the third eyebox EB_T to the top point of the perpendicular bisector of the third eyebox EB_T, a distance from an intersection, of a line connecting the observation point and the central point of the third projection sub-image 2113 and the projection display region 11, to the bottom edge 12 of the laminated glass 10 increases, and the theoretical wedge-angle value required to eliminate reflected ghosting decreases. Therefore, in the coordinate system of the actual wedge-angle fitting curve L0, a distribution of discrete points of the theoretical wedge-angle values, through which no reflected ghosting is observed when the central point of the third projection sub-image 2113 is observed along the perpendicular bisector of the third eyebox EB_T, is located at the lower right of the sixth limiting point P6.

Therefore, the preset region S0, formed by sequentially connecting the first limiting point P1, the fifth limiting point P5, the second limiting point P2, the third limiting point P3, the sixth limiting point P6, and the fourth limiting point P4, more accurately includes a distribution of multiple theoretical wedge-angle values through which no reflected ghosting is observed when different regions of the projection image 211 are observed from different points on the perpendicular bisector of the first eyebox EB_S, a distribution of multiple theoretical wedge-angle values through which no reflected ghosting is observed when different regions of the projection image 211 are observed from different points on the perpendicular bisector of the second eyebox EB_M, and a distribution of multiple theoretical wedge-angle values through which no reflected ghosting is observed when different regions of the projection image 211 are observed from different points on the perpendicular bisector of the third eyebox EB_T. Hence, there is a further reduced deviation between the continuous curve of the actual wedge-angle fitting curve L0 located within the preset region S0 and theoretical wedge-angle values through which no reflected ghosting is observed when different regions of the projection image 211 are dynamically observed along the perpendicular bisector of the eyebox EB. That is, with the aid of the wedge angle of the projection display region 11, reflected ghosting can be further reduced or eliminated when dynamically observing different regions of the projection image 211.

Referring to FIG. 4 and FIG. 7, FIG. 7 is a schematic diagram illustrating the actual wedge-angle fitting curve and the preset region of the projection display region of the HUD system in FIG. 4 according to another embodiment. In this embodiment, a first limiting line segment P1-P4 is formed by connecting the first limiting point P1 and the fourth limiting point P4, a second limiting line segment P2-P3 is formed by connecting the second limiting point P2 and the third limiting point P3, and the actual wedge-angle fitting curve L0 intersects the first limiting line segment P1-P4 and/or the second limiting line segment P2-P3.

In this embodiment, the actual wedge-angle fitting curve L0 intersects the first limiting line segment P1-P4, not only ensuring that the actual wedge-angle fitting curve L0 has the continuous curve located within the preset region S0, but also reducing a deviation between part of the actual wedge-angle fitting curve L0 located at the left of the first limiting line segment P1-P4 and theoretical wedge-angle values through which no reflected ghosting is observed when part of the first projection sub-image 2111 adjacent to a bottom of the first projection sub-image 2111 is observed from certain points on the perpendicular bisector of the first eyebox EB_S, and reducing a deviation between the part of the actual wedge-angle fitting curve L0 located at the left of the first limiting line segment P1-P4 and theoretical wedge-angle values through which no reflected ghosting is observed when part of the second projection sub-image 2112 adjacent to a bottom of the second projection sub-image 2112 is observed from certain points on the perpendicular bisector of the second eyebox EB_M.

In this embodiment, the actual wedge-angle fitting curve L0 intersects the second limiting line segment P2-P3, not only ensuring that the actual wedge-angle fitting curve L0 has the continuous curve located within the preset region S0, but also reducing a deviation between part of the actual wedge-angle fitting curve L0 located at the right of the second limiting line segment P2-P3 and theoretical wedge-angle values through which no reflected ghosting is observed when part of the second projection sub-image 2112 adj acent to a top of the second projection sub-image 2112 is observed from certain points on the perpendicular bisector of the second eyebox EB_M, and reducing a deviation between the part of the actual wedge-angle fitting curve L0 located at the right of the second limiting line segment P2-P3 and theoretical wedge-angle values through which no reflected ghosting is observed when part of the third projection sub-image 2113 adjacent to a top of the third projection sub-image 2113 is observed from certain points on the perpendicular bisector of the third eyebox EB_T.

Furthermore, in this embodiment, theoretical wedge-angle values, through which no reflected ghosting is observed when the central point of the first projection sub-image 2111 is observed by the human eyes that move from the bottom point of the perpendicular bisector of the first eyebox EB_S to the top point of the perpendicular bisector of the first eyebox EB_S along the perpendicular bisector of the first eyebox EB_S, are distributed in the vicinity of a line connecting the first limiting point P1 and the fifth limiting point P5. Preferably, the actual wedge-angle fitting curve L0 extends in the vicinity of the line connecting the first limiting point P1 and the fifth limiting point P5. As such, reflected ghosting for dynamically observing a central region of the first projection sub-image 2111 can be further reduced or even eliminated.

Furthermore, in this embodiment, theoretical wedge-angle values, through which no reflected ghosting is observed when the central point of the third projection sub-image 2113 is observed by the human eyes that move from the bottom point of the perpendicular bisector of the third eyebox EB_T to the top point of the perpendicular bisector of the third eyebox EB_T along the perpendicular bisector of the third eyebox EB_T, are distributed in the vicinity of a line connecting the third limiting point P3 and the sixth limiting point P6. Preferably, the actual wedge-angle fitting curve L0 extends in the vicinity of the line connecting the sixth limiting point P6 and the third limiting point P3. As such, reflected ghosting for dynamically observing a central region of the third projection sub-image 2113 can be further reduced or even eliminated.

Referring to FIG. 4 and FIG. 8, FIG. 8 is a schematic diagram illustrating the actual wedge-angle fitting curve and the preset region of the projection display region of the HUD system in FIG. 4 according to another embodiment. In this embodiment, the actual wedge-angle fitting curve L0 extends through a seventh limiting point G. The seventh limiting point G is a centroid of distribution, in a coordinate system where the actual wedge-angle fitting curve L0 is located, of multiple theoretical wedge-angle values through which no reflected ghosting is observed when the second projection sub-image 2112 is observed from each point of the perpendicular bisector of the second eyebox EB_M.

In this embodiment, the actual wedge-angle fitting curve L0 extends through the seventh limiting point G. The seventh limiting point G is the centroid of distribution, in the coordinate system where the actual wedge-angle fitting curve L0 is located, of multiple theoretical wedge-angle values through which no reflected ghosting is observed when the second projection sub-image 2112 is observed along the perpendicular bisector of the second eyebox EB_M. In other words, there is minimal ghosting when the second projection sub-image 2112 is observed along the perpendicular bisector of the second eyebox EB_M. Since the second eyebox EB_M represents a normal eye height of the driver inside the cabin, it ensures that when the vehicle experiences minor bumps or no bumps, minimal ghosting will be observed during a dynamical observation by the driver of the projection image 211.

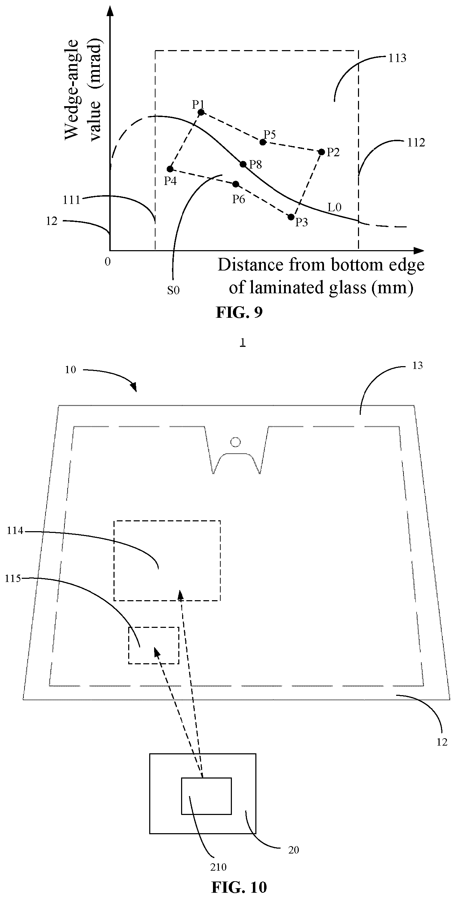

Referring to FIG. 4 and FIG. 9, FIG. 9 is a schematic diagram illustrating the actual wedge-angle fitting curve and the preset region of the projection display region of the HUD system in FIG. 4 according to another embodiment. In this embodiment, the actual wedge-angle fitting curve L0 extends through an eighth limiting point P8. An eighth line is obtained by connecting a midpoint of the perpendicular bisector of the second eyebox EB_M and the central point of the second projection sub-image 2112, and coordinates of the eighth limiting point P8 include a distance from an intersection of the eighth line and the at least one projection display region 11 to the bottom edge 12 of the laminated glass 10, and a theoretical wedge-angle value through which no reflected ghosting is observed when the central point of the second projection sub-image 2112 is observed from the midpoint of the perpendicular bisector of the second eyebox EB_M.

In this embodiment, in a vehicle, the driver's eyes are typically at the midpoint of the perpendicular bisector of the second eyebox EB_M. Meanwhile, information with higher importance is generally displayed at the central point of the projection image 211. Therefore, it is important that no reflected ghosting is observed when the central point of the second projection sub-image 2112 is observed by the driver's eyes at the midpoint of the perpendicular bisector of the second eyebox EB_M. Therefore, the actual wedge-angle fitting curve L0 extending through the eighth limiting point P8 facilitates the observation for the projection image 211 by the driver's eyes at the normal position while driving the vehicle.

To significantly reduce dynamic ghosting, the actual wedge-angle fitting curve L0 preferably extends in the vicinity of the line connecting the first limiting point P1 and the fifth limiting point P5, as well as in the vicinity of the line connecting the sixth limiting point P6 and the third limiting point P3, and also extends through the seventh limiting point G or the eighth limiting point P8. This avoids abrupt local changes in the actual wedge-angle fitting curve L0, ensuring that dynamic ghosting is minimized across from various eyebox sub-planes EB11.

Referring again to FIG. 1, in this embodiment, in a direction from the bottom edge 12 to a top edge 13 of the laminated glass 110, a ratio of a length of the zone 113 to a length of the at least one projection display region 11 is not less than 70%.

In this embodiment, in the direction from the bottom edge 12 to the top edge 13 of the laminated glass 110, the ratio of the length of the zone 113 to the length of the projection display region 11 is not less than 70%. Preferably, the ratio of the length of the zone 113 to the length of the projection display region 11 is not less than 75%, or not less than 80%, or not less than 85%, or not less than 90%, or not less than 95%, or equal to 100%. The length of the zone 113 is measured in a direction from the lower side edge 111 to the upper side edge 112.

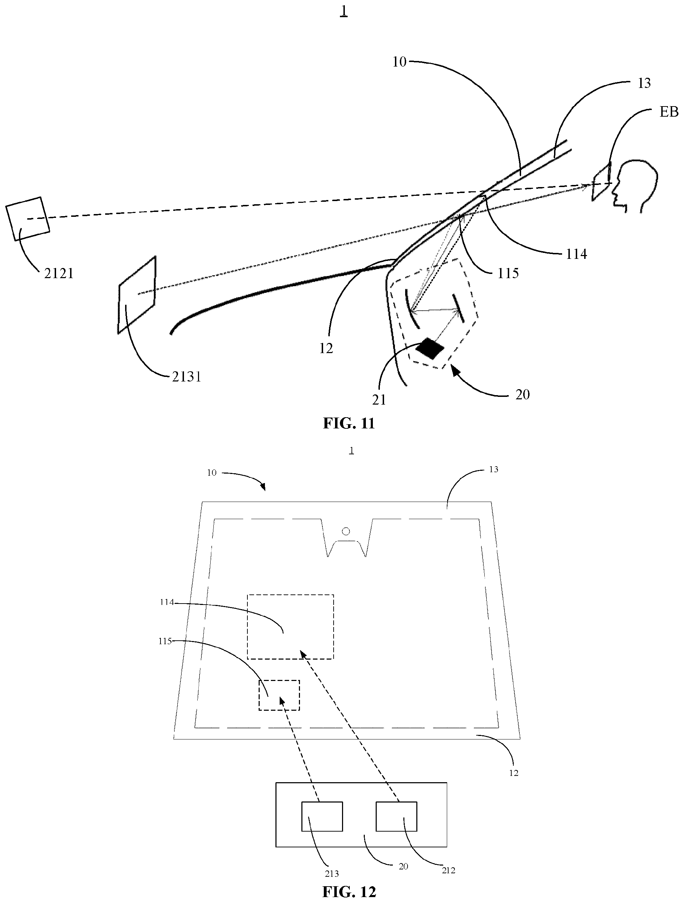

Referring to FIG. 10 and FIG. 11, FIG. 10 is a schematic structural diagram of the HUD system according to another embodiment of the disclosure, and FIG. 11 is a schematic diagram illustrating projection imaging of the HUD system in FIG. 10. In this embodiment, the at least one projection display region 11 includes at least one first projection display region 114 and at least one second projection display region 115. The at least one projection light source 21 is configured to project light onto the at least one first projection display region 114 to form a first projection image 2121, and a virtual image distance of the first projection image 2121 ranges from 7 meters to 100 meters. The at least one projection light source 21 is configured to project light onto the at least one second projection display region 115 to form a second projection image 2131, and a virtual image distance of the second projection image 2131 ranges from 1 meter to 6 meters.

In this embodiment, the first projection display region 114 is used for long-range projection display. Specifically, the first projection display region 114 is used for fusion of display information and real scene, and is used for projection display of complex graphics corresponding to objects in the real scene, thereby achieving road condition-vehicle-driver interaction. The second projection display region 115 is used for short-range projection display. Specifically, the second projection display region 115 is used for short-range display of vehicle operation parameters, reducing the need for the driver to look down at the dashboard or related information, facilitating the driver's eye adaptation between near and far distances, minimizing the need to look down at the dashboard, and maximizing the driver's focus while driving to enhance driving safety.

Referring to FIG. 12, FIG. 12 is a schematic structural diagram of the HUD system according to another embodiment of the disclosure. In this embodiment, the projection assembly 20 includes at least one first projection light source 21 and at least one second projection light source 214, where the at least one first projection light source 212 is configured to project light onto the at least one first projection display region 114, and the at least one second projection light source 213 is configured to project light onto the at least one second projection display region 115.

In this embodiment, the first projection light source 212 is configured to project light onto the first projection display region 114 for long-range projection display. Specifically, the first projection display region 114 is used for fusion of display information and real scene, and is used for projection display of complex graphics corresponding to objects in the real scene, thereby achieving road condition-vehicle-driver interaction. The second projection light source 213 is configured to project light onto the second projection display region 115 for short-range projection display. Specifically, the second projection display region 115 is used for short-range display of vehicle operation parameters, reducing the need for the driver to look down at the dashboard or related information, facilitating the driver's eye adaptation between near and far distances, minimizing the need to look down at the dashboard, and maximizing the driver's focus while driving to enhance driving safety.

In a functional region through which signals from sensors such as cameras and LiDAR pass, a wedge-shaped intermediate adhesive film can also be used to optimize transmitted ghosting of corresponding sensors. The wedge-shaped intermediate adhesive film within the functional region has a fixed wedge angle or a wedge angle with a fixed slope. The wedge angle within the functional region has either a fixed value or follows a curve with a simple first-order function variation, making it easy to control the production of the wedge angle.

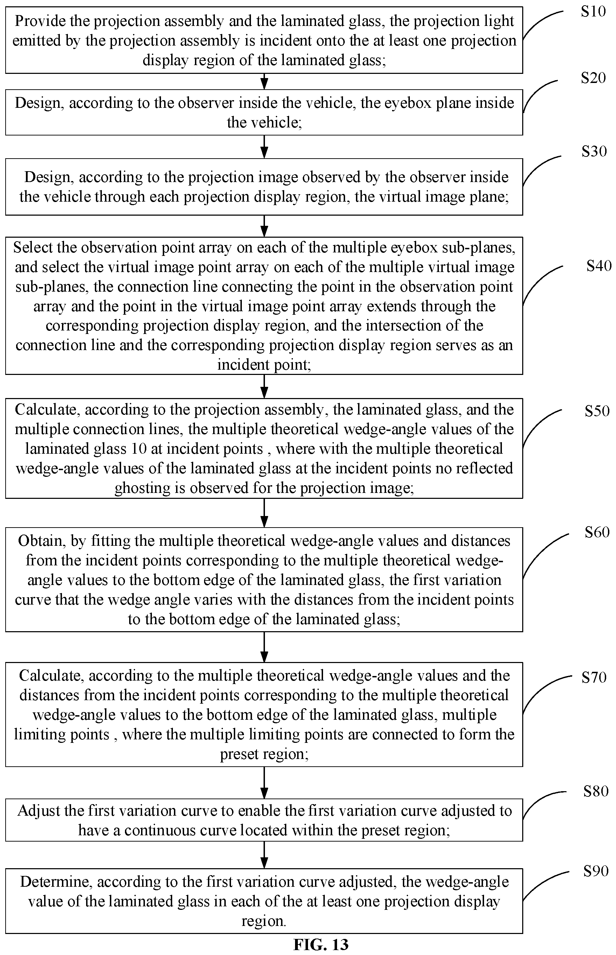

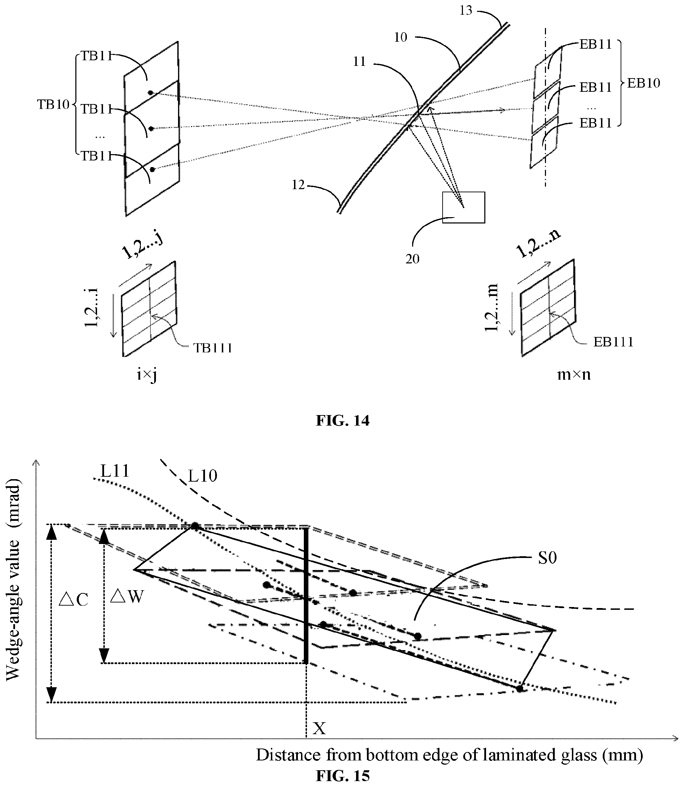

A method for designing the HUD system 1 is further provided in the embodiments of the disclosure. Referring to FIGS. 13, 14, and 15, FIG. 13 is a flow chart of the method for designing the HUD system according to an embodiment of the disclosure, FIG. 14 is a schematic diagram illustrating the method for designing the HUD system in FIG. 13, and FIG. 15 is a schematic diagram illustrating the first variation curve in the method for designing the HUD system in FIG. 13. In this embodiment, the method for designing the HUD system 1 includes the following. A projection assembly 20 and a laminated glass 10 are provided. Projection light emitted by the projection assembly 20 is incident onto at least one projection display region 11 of the laminated glass 10. An eyebox plane EB10 inside a vehicle is designed according to an observer inside the vehicle. A virtual image plane TB10 is designed according to a projection image 211 observed by the observer inside the vehicle through each of the at least one projection display region 11. The eyebox plane EB10 includes multiple eyebox sub-planes EB11 arranged from low to high, and the virtual image plane TB10 includes multiple virtual image sub-planes TB11 arranged from high to low, where the multiple virtual image sub-planes TB11 are in one-to-one correspondence with the multiple eyebox sub-planes EB11. An observation point array EB111 is selected on each of the multiple eyebox sub-planes EB11, and a virtual image point array TB111 is selected on each of the multiple virtual image sub-planes TB11. A connection line connecting a point in the observation point array EB111 and a point in the virtual image point array TB111 extends through a corresponding projection display region 11, and an intersection of the connection line and the corresponding projection display region 11 serves as an incident point. Multiple theoretical wedge-angle values of the laminated glass 10 at incident points are calculated according to the projection assembly 20, the laminated glass 10, and multiple connection lines, where with the multiple theoretical wedge-angle values of the laminated glass 10 at the incident points no reflected ghosting is observed for the projection image 211. A first variation curve L10, that the wedge angle varies with the distances from the incident points to the bottom edge 12 of the laminated glass 10, is obtained by fitting the multiple theoretical wedge-angle values and distances from the incident points corresponding to the multiple theoretical wedge-angle values to the bottom edge 12 of the laminated glass 10. Multiple limiting points are calculated according to the multiple theoretical wedge-angle values and the distances from the incident points corresponding to the multiple theoretical wedge-angle values to the bottom edge 12 of the laminated glass 10. The multiple limiting points are connected to form a preset region S0. The first variation curve L10 is adjusted to enable the first variation curve adjusted L11 to have a continuous curve located within the preset region S0. A wedge-angle value of the laminated glass 10 in each of the at least one projection display region 11 is determined according to the first variation curve adjusted L11.

In this embodiment, the laminated glass 10 may serve as a front windshield of a vehicle and be applied to the HUD system 1 of the vehicle. The method for designing the laminated glass 10 includes operations carried out in S10, S20, S30, S40, S50, S60, S70, S80, and S90. The operations carried out in S10, S20, S30, S40, S50, S60, S70, S80, and S90 will be described in detail below.

At S10, the projection assembly 20 and the laminated glass 10 are provided. The projection light emitted by the projection assembly 20 is incident onto the at least one projection display region 11 of the laminated glass 10.

At S20, the eyebox plane EB10 inside the vehicle is designed according to the observer inside the vehicle.

At S30, the virtual image plane TB10 is designed according to the projection image 211 observed by the observer inside the vehicle through each projection display region 11.

In this embodiment, the eyebox plane EB10 includes the multiple eyebox sub-planes EB11 arranged from low to high. The virtual image plane TB10 includes the multiple virtual image sub-planes TB11 arranged from high to low. The multiple virtual image sub-planes TB11 are in one-to-one correspondence with the multiple eyebox sub-planes EB11. Specifically, the eyebox plane EB10 is used to simulate a plane of the eyes of the observer seated in the cabin of the vehicle. The multiple eyebox sub-planes EB11 are used to simulate the observer's eyes at different heights, i.e., the multiple eyebox sub-planes EB11 are used to simulate the observer's different viewing angles. The virtual image plane TB10 is used to simulate a virtual image produced, by the projection light reflected by the laminated glass 10 onto the eyebox plane EB10, at another side of the laminated glass 10. The multiple eyebox sub-planes EB11 are used to simulate virtual images produced, by the projection light reflected by the laminated glass 10 onto the multiple eyebox sub-planes EB11 at different positions, at the another side of the laminated glass 10. Specifically, the multiple eyebox sub-planes EB11 and the multiple virtual image sub-planes TB11 exhibit a centrally symmetrical relationship in terms of height, i.e., the highest eyebox sub-plane EB11 corresponds to the lowest virtual image sub-plane TB11, and the lowest eyebox sub-plane EB11 corresponds to the highest virtual image sub-plane TB11.

At S40, the observation point array EB111 is selected on each of the multiple eyebox sub-planes EB11, and the virtual image point array TB111 is selected on each of the multiple virtual image sub-planes TB11. The connection line connecting the point in the observation point array EB 111 and the point in the virtual image point array TB111 extends through the corresponding projection display region 11, and the intersection of the connection line and the corresponding projection display region 11 serves as an incident point.

In this embodiment, each point in the observation point array EB111 is used to simulate a corresponding position of the observer's eyes. Each point in the virtual image point array TB111 is used to simulate a corresponding point in a virtual image on the virtual image plane TB10 produced, by the projection light reflected by the laminated glass 10 onto the eyebox sub-plane EB11, at the another side of the laminated glass 10. Specifically, each point in the virtual image point array TB111 corresponds to one or more points in the observation point array EB111, i.e., a virtual image at the same position on the virtual image plane TB10 can be seen by the observer from the eyebox plane EB10 at different positions. In addition, virtual images at different positions on the virtual image plane TB10 can be seen by the observer from the eyebox plane EB10 at the same position.

At S50, the multiple theoretical wedge-angle values of the laminated glass 10 at incident points are calculated according to the projection assembly 20, the laminated glass 10, and the multiple connection lines, where with the multiple theoretical wedge-angle values of the laminated glass 10 at the incident points no reflected ghosting is observed for the projection image 211.

In this embodiment, in each eyebox sub-plane EB11 and each virtual image sub-plane TB11 that are arranged in one-to-one correspondence, lines connecting all points in the observation point array EB111 and all points in the virtual image point array TB111 intersect with the laminated glass 10 at intersections, i.e., the incident points. By calculating the theoretical wedge-angle values at the incident points through which no reflected ghosting is observed when the virtual image on the virtual image sub-plane TB11 is observed by the observer from all points in the observation point array EB111. The number of the incident points for the simulated calculation is equal to the number of theoretical wedge-angle values.

At S60, the first variation curve L10, that the wedge angle varies with the distances from the incident points to the bottom edge 12 of the laminated glass 10, is obtained by fitting the multiple theoretical wedge-angle values and distances from the incident points corresponding to the multiple theoretical wedge-angle values to the bottom edge 12 of the laminated glass 10.

In this embodiment, the multiple theoretical wedge-angle values exhibit a discrete distribution relative to the distances from the incident points to the bottom edge 12 of the laminated glass 10. Specifically, in one embodiment, for each eyebox sub-plane EB11 and each virtual image sub-plane TB11, a discrete sub-map of the multiple theoretical wedge-angle values can be calculated. These discrete sub-maps can be combined into the same coordinate system to form a discrete map. By fitting a function to the discrete map of the multiple theoretical wedge-angle values, the first variation curve can be derived. For instance, the function may be, but is not limited to, a cubic, quartic, quintic polynomial function, an exponential function, a power function, a logarithmic function, or other basic functions, as well as composite functions formed from these. Data curve fitting can be done using software like Microsoft Excel, WPS, MATLAB, or OriginPro. Since the observer can observe multiple images at different distances or angles through a particular point on the laminated glass 10, there are multiple theoretical wedge-angle values at that point. However, only one wedge-angle value exists at any point on the laminated glass 10. Additionally, there are also multiple theoretical wedge-angle values at each of other points that are located at the same height as the particular point in the direction from the bottom edge 12 to the top edge 13, but a wedge-angle value at a point located at a certain distance from the bottom edge 12 is a single value. Therefore, it is necessary to appropriately select a wedge-angle value for each incident point on the laminated glass 10 to reduce ghosting. By fitting a function to the multiple theoretical wedge-angle values, a deviation between wedge-angle values within the projection display region 11 of the laminated glass 10 and the theoretical wedge-angle values can be minimized, thereby reducing image ghosting of projection onto the projection display region 11 of the laminated glass 10 and improving the image quality of the laminated glass 10. In another embodiment, for the multiple theoretical wedge-angle values corresponding to each incident point, the average of the maximum and minimum values of the multiple theoretical wedge-angle values at that point is selected, and the averages of the maximum and minimum values of the multiple theoretical wedge-angle values at any incident point are connected to form the first variation curve L10.

At S70, multiple limiting points are calculated according to the multiple theoretical wedge-angle values and the distances from the incident points corresponding to the multiple theoretical wedge-angle values to the bottom edge 12 of the laminated glass 10, and the multiple limiting points are connected to form the preset region S0.

In this embodiment, the preset region S0 is a region accommodating a distribution of discrete points of theoretical wedge-angle values, through which no reflected ghosting is observed when a central point of the virtual image plane TB10 is observed from the eyebox plane EB10 at different heights.

At S80, the first variation curve L10 is adjusted to enable the first variation curve adjusted L11 to have a continuous curve located within the preset region S0.

In this embodiment, adjustments can be made, including but not limited to, by selecting points or fitting functions to the wedge-angle values of the first variation curve L10, so that the adjusted first variation curve L11 has a continuous curve located within the preset region S0. A deviation between the actual wedge-angle values corresponding to the continuous curve of the first variation curve adjusted L11 located within the preset region S0 and the theoretical wedge-angle values through which no reflected ghosting is observed when the central point of the projection image 211 is observed from the eyebox plane EB10 at different heights can be minimized, that is, there is minimal or no reflected ghosting is observed when the central point of the projection image 211 is observed from the eyebox plane EB10 at different heights.

At S90, the wedge-angle value of the laminated glass 10 in each of the at least one projection display region 11 is determined according to the first variation curve adjusted L11.

In this embodiment, the wedge-angle values of the laminated glass 10 in the projection display region 11 are determined through the first variation curve adjusted L11 to reduce image ghosting when dynamically observing the projection display region 11 of the laminated glass 10 from the eyebox plane EB10. Specifically, by designing and selecting the virtual image plane TB10, the distribution of the multiple theoretical wedge-angle values of the laminated glass 10 in the projection display region 11 can be calculated, and the first variation curve adjusted L11 corresponding to the projection display region 11 can be fitted, thereby determining the wedge-angle values of the laminated glass 10 in the corresponding projection display region 11.

In one embodiment, the first variation curve L10 can be adjusted for optimization. "Adjusting the first variation curve L10 to enable the first variation curve adjusted 111 to have the continuous curve located within the preset region S0" includes the following. The first variation curve L10 is adjusted to enable the first variation curve adjusted L11 to have the continuous curve within the preset region.

Specifically, in this embodiment, the first variation curve L10 is obtained by fitting the multiple theoretical wedge-angle values through which no reflected ghosting is observed when the projection image 211 is observed from specific positions on the eyebox plane EB10. The first variation curve adjusted L11 has the continuous curve located within the preset region S0, not only ensuring minimal or no reflected ghosting is observed when the projection image 211 is observed from the eyebox plane EB10 at a specific position, but also ensuring minimal or no reflected ghosting is observed when the central point of the projection image 211 is dynamically observed from the eyebox plane EB10 at different positions.

In this embodiment, the first variation curve adjusted L11 conforms to a first to fourth order function and has the continuous curve that decreases non-linearly, ensuring the first variation curve adjusted L11 is smooth throughout, thus preventing local abrupt changes in wedge-angle values that would exacerbate reflected ghosting.

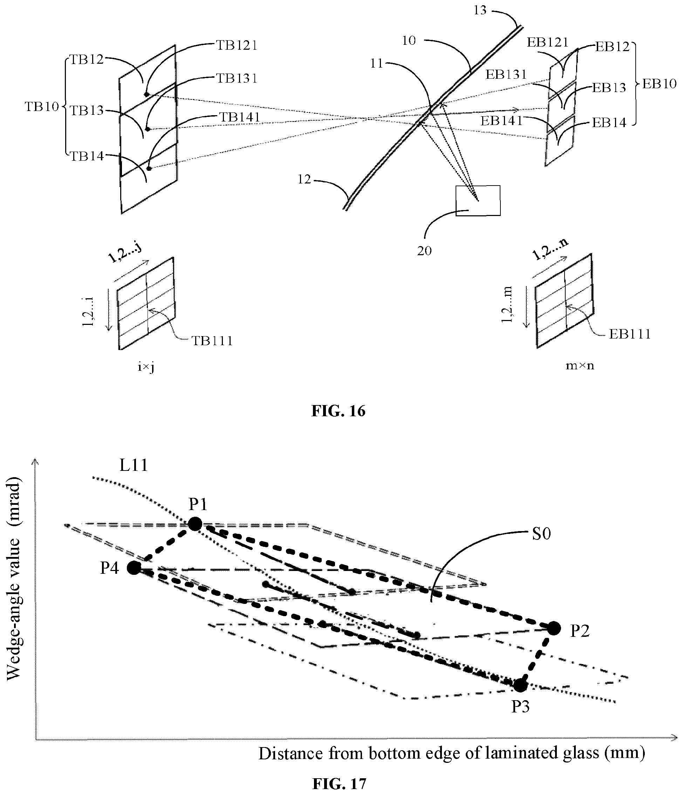

Referring to FIG. 16, FIG. 16 is a schematic diagram illustrating the eyebox plane and the virtual image plane in the method for designing the HUD system in FIG. 14, and FIG. 17 is a schematic diagram illustrating the first variation curve adjusted in the method for designing the HUD system in FIG. 16. In this embodiment, the eyebox plane EB 10 includes a first eyebox sub-plane EB 12, a second eyebox sub-plane EB13, and a third eyebox sub-plane EB14 which are sequentially arranged from low to high. The virtual image plane TB10 includes a first virtual image sub-plane TB12, a second virtual image sub-plane TB13, and a third virtual image sub-plane TB14 which are sequentially arranged from high to low. The preset region S0 is a polygon, and the multiple limiting points include a first limiting point P1, a second limiting point P2, a third limiting point P3, and a fourth limiting point P4. The multiple limiting points are calculated according to the multiple theoretical wedge-angle values and the distances from the incident points corresponding to the multiple theoretical wedge-angle values to the bottom edge 12 of the laminated glass 10 as follows. A first line is obtained by connecting a bottom point of a perpendicular bisector of the first eyebox sub-plane EB12 and a central point of the first virtual image sub-plane TB12. The first line intersects the at least one projection display region 11 at a first incident point. A second line is obtained by connecting a top point of a perpendicular bisector of the second eyebox sub-plane EB13 and an upper left corner point of the second virtual image sub-plane TB13. The second line intersects the at least one projection display region 11 at a second incident point. A third line is obtained by connecting a top point of a perpendicular bisector of the third eyebox sub-plane EB14 and a central point of the third virtual image sub-plane TB14. The third line intersects the at least one projection display region 11 at a third incident point. A fourth line is obtained by connecting a bottom point of the perpendicular bisector of the second eyebox sub-plane EB 13 and a lower right corner point of the second virtual image sub-plane TB13. The fourth line intersects the at least one projection display region 11 at a fourth incident point. A first limiting theoretical wedge-angle value at the first incident point, through which no reflected ghosting is observed, is calculated according to the projection assembly 20, the laminated glass 10, and the first line. A second limiting theoretical wedge-angle value at the second incident point, through which no reflected ghosting is observed, is calculated according to the projection assembly 20, the laminated glass 10, and the second line. A third limiting theoretical wedge-angle value at the third incident point, through which no reflected ghosting is observed, is calculated according to the projection assembly 20, the laminated glass 10, and the third line. A fourth limiting theoretical wedge-angle value at the fourth incident point, through which no reflected ghosting is observed, is calculated according to the projection assembly 20, the laminated glass 10, and the fourth line. The first limiting point P1 is obtained according to the first limiting theoretical wedge-angle value and a distance from the first incident point to the bottom edge 12 of the laminated glass 10. The second limiting point P2 is obtained according to the second limiting theoretical wedge-angle value and a distance from the second incident point to the bottom edge 12 of the laminated glass 10. The third limiting point P3 is obtained according to the third limiting theoretical wedge-angle value and a distance from the third incident point to the bottom edge 12 of the laminated glass 10. The fourth limiting point P4 is obtained according to the fourth limiting theoretical wedge-angle value and a distance from the fourth incident point to the bottom edge 12 of the laminated glass 10.

In this embodiment, the eyebox plane EB10 has multiple parts at multiple positions above the ground and can be divided into the first eyebox sub-plane EB12 at the lowest height, the second eyebox sub-plane EB13 at the normal height, and the third eyebox sub-plane EB14 at the highest height. Correspondingly, the virtual image plane TB10 has the first virtual image sub-plane TB12 matching the first eyebox sub-plane EB12, the second virtual image sub-plane TB13 matching the second eyebox sub-plane EB13, and the third virtual image sub-plane TB14 matching the third eyebox sub-plane EB14.

In this embodiment, a first observation point sub-array EB121 is selected on the first eyebox sub-plane EB12 and is implemented as an array m1 * n1, where m1 ≥ 1 and is a natural number, and n1 ≥ 1 and is a natural number. For example, m1 may be, but is not limited to, 3, 5, or 8, and n1 may be, but is not limited to, 3, 5, or 8. A second observation point sub-array EB131 is selected on the second eyebox sub-plane EB13 and is implemented as an array m2 * n2, where m2 ≥ 1 and is a natural number, and n2 ≥ 1 and is a natural number. For example, m2 may be, but is not limited to, 3, 5, or 8, and n2 may be, but is not limited to, 3, 5, or 8. m2 may be the same as or different from m1, and n2 may be the same as or different from n1. A third observation point sub-array EB141 is selected on the third eyebox sub-plane EB14 and is implemented as m3 * n3, where m3 ≥ 1 and is a natural number, and n3 ≥ 1 and is a natural number. For example, m3 may be, but is not limited to, 3, 5, or 8, and n3 may be, but is not limited to, 3, 5, or 8. m3 may be the same as or different from m1 and m2, and n3 may be the same as or different from n1 and n2.

In this embodiment, a first virtual image point sub-array TB121 is selected on the first virtual image sub-plane TB12 and is implemented as an array i1 * j1, where i1 ≥ 1 and is a natural number, and j1 ≥ 1 and is a natural number. For example, i1 may be, but is not limited to, 3, 5, or 8, and j1 may be, but is not limited to, 3, 5, or 8. A second virtual image point sub-array TB131 is selected on the second virtual image sub-plane TB13 and is implemented as an array i2 * j2, where i2 ≥ 1 and is a natural number, and j2 ≥ 1 and is a natural number. For example, i2 may be, but is not limited to, 3, 5, or 8, and j2 may be, but is not limited to, 3, 5, or 8. i2 may be the same as or different from i1, and j2 may be the same as or different from j1. A third virtual image point sub-array TB141 is selected on the third virtual image sub-plane TB14 and is implemented as an array i3 * j3, where i3 ≥ 1 and is a natural number, and j3 ≥ 1 and is a natural number. For example, i3 may be, but is not limited to, 3, 5, or 8, and j3 may be, but is not limited to, 3, 5, or 8. i3 may be the same as or different from i1 and i2, and j3 may be the same as or different from j 1 and j2. It may be noted that i1 * j1 may be the same as or different from m1 * n1, i2 * j2 may be the same as or different from m2 * n2, and i3 * j3 may be the same as or different from m3 * n3.

The calculations for the first limiting point P1, the second limiting point P2, the third limiting point P3, and the fourth limiting point P4 will be described in detail below.

The first line is obtained by connecting the bottom point of the perpendicular bisector of the first eyebox sub-plane EB12 and the central point of the first virtual image sub-plane TB12. The first line intersects the at least one projection display region 11 at the first incident point. The second line is obtained by connecting the top point of the perpendicular bisector of the second eyebox sub-plane EB13 and the upper left corner point of the second virtual image sub-plane TB13. The second line intersects the at least one projection display region 11 at the second incident point. The third line is obtained by connecting the top point of the perpendicular bisector of the third eyebox sub-plane EB14 and the central point of the third virtual image sub-plane TB14. The third line intersects the at least one projection display region 11 at the third incident point. The fourth line is obtained by connecting the bottom point of the perpendicular bisector of the second eyebox sub-plane EB13 and the lower right corner point of the second virtual image sub-plane TB13. The fourth line intersects the at least one projection display region 11 at the fourth incident point.

The first limiting theoretical wedge-angle value at the first incident point, through which no reflected ghosting is observed, is calculated according to the projection assembly 20, the laminated glass 10, and the first line. The second limiting theoretical wedge-angle value at the second incident point, through which no reflected ghosting is observed, is calculated according to the projection assembly 20, the laminated glass 10, and the second line. The third limiting theoretical wedge-angle value at the third incident point, through which no reflected ghosting is observed, is calculated according to the projection assembly 20, the laminated glass 10, and the third line. The fourth limiting theoretical wedge-angle value at the fourth incident point, through which no reflected ghosting is observed, is calculated according to the projection assembly 20, the laminated glass 10, and the fourth line.

The first limiting point P1 is obtained according to the first limiting theoretical wedge-angle value and the distance from the first incident point to the bottom edge 12 of the laminated glass 10. The second limiting point P2 is obtained according to the second limiting theoretical wedge-angle value and the distance from the second incident point to the bottom edge 12 of the laminated glass 10. The third limiting point P3 is obtained according to the third limiting theoretical wedge-angle value and the distance from the third incident point to the bottom edge 12 of the laminated glass 10. The fourth limiting point P4 is obtained according to the fourth limiting theoretical wedge-angle value and the distance from the fourth incident point to the bottom edge 12 of the laminated glass 10.

In this embodiment, the preset region S0 is a quadrilateral, and the preset region S0 is formed by sequentially connecting the first limiting point P1, the second limiting point P2, the third limiting point P3, and the fourth limiting point P4. Specifically, the preset region S0 and the first variation curve adjusted L11 are in the same coordinate system, with the horizontal coordinate representing a distance from the bottom edge 12 of the laminated glass 10 and the vertical coordinate representing a wedge-angle value.

According to the characteristics of projection imaging, at the first eyebox sub-plane EB12, as an observation point, from which the central point of the first virtual image sub-plane TB12 is observed, moves in a direction from the bottom point of the perpendicular bisector of the first eyebox sub-plane EB12 to a top point of the perpendicular bisector of the first eyebox sub-plane EB12, a distance from an intersection, of a line connecting the observation point and the central point of the first virtual image sub-plane TB12 and the projection display region 11, to the bottom edge 12 of the laminated glass 10 increases, and the theoretical wedge-angle value required to eliminate reflected ghosting decreases. Therefore, in the coordinate system of the first variation curve adjusted L11, a distribution of discrete points of the theoretical wedge-angle values, through which no reflected ghosting is observed when the central point of the first virtual image sub-plane TB12 is observed along the perpendicular bisector of the first eyebox sub-plane EB12, is located at the lower right of the first limiting point P 1.

According to the characteristics of projection imaging, at the second eyebox sub-plane EB13, as an observation point, from which the upper left corner point of the second virtual image sub-plane TB 13 is observed, moves in a direction from the top point of the perpendicular bisector of the second eyebox sub-plane EB 13 to the bottom point of the perpendicular bisector of the second eyebox sub-plane EB 13, a distance from an intersection, of a line connecting the observation point and the upper left corner point of the second virtual image sub-plane TB13 and the projection display region 11, to the bottom edge 12 of the laminated glass 10 decreases, and the theoretical wedge-angle value required to eliminate reflected ghosting increases. Therefore, in the coordinate system of the first variation curve adjusted L11, a distribution of discrete points of the theoretical wedge-angle values, through which no reflected ghosting is observed when the upper left corner point of the second virtual image sub-plane TB13 is observed along the perpendicular bisector of the second eyebox sub-plane EB13, is located at the upper left of the second limiting point P2. Additionally, a distribution of discrete points of the theoretical wedge-angle values, through which no reflected ghosting is observed when a central point of the second virtual image sub-plane TB13 is observed along the perpendicular bisector of the second eyebox sub-plane EB13, is also located at the upper left of the second limiting point P2.

According to the characteristics of projection imaging, at the third eyebox sub-plane EB14, as an observation point, from which the central point of the third virtual image sub-plane TB14 moves in a direction from the top point of the perpendicular bisector of the third eyebox sub-plane EB14 to a bottom point of the perpendicular bisector of the third eyebox sub-plane EB14, a distance from an intersection, of a line connecting the observation point and the central point of the third virtual image sub-plane TB14 and the projection display region 11, to the bottom edge 12 of the laminated glass 10 decreases, and the theoretical wedge-angle value required to eliminate reflected ghosting increases. Therefore, in the coordinate system of the first variation curve adjusted L11, a distribution of discrete points of the theoretical wedge-angle values, through which no reflected ghosting is observed when the central point of the third virtual image sub-plane TB14 is observed along the perpendicular bisector of the third eyebox sub-plane EB14, is located at the upper left of the third limiting point P3.

According to the characteristics of projection imaging, at the second eyebox sub-plane EB13, as an observation point, from which the lower right corner point of the second virtual image sub-plane TB13 is observed, moves in a direction from the bottom point of the perpendicular bisector of the second eyebox sub-plane EB13 to the top point of the perpendicular bisector of the second eyebox sub-plane EB13, a distance from an intersection, of a line connecting the observation point and the lower right corner point of the second virtual image sub-plane TB13 and the projection display region 11, to the bottom edge 12 of the laminated glass 10 increases, and the theoretical wedge-angle value required to eliminate reflected ghosting decreases. Therefore, in the coordinate system of the first variation curve adjusted L11, a distribution of discrete points of the theoretical wedge-angle values, through which no reflected ghosting is observed when the lower right corner point of the second virtual image sub-plane TB13 is observed along the perpendicular bisector of the second eyebox sub-plane EB13, is located at the lower right of the fourth limiting point P4. Additionally, a distribution of discrete points of the theoretical wedge-angle values, through which no reflected ghosting is observed when the central point of the second virtual image sub-plane TB13 is observed along the perpendicular bisector of the second eyebox sub-plane EB13, is also located at the lower right of the fourth limiting point P4.

Therefore, the preset region S0, formed by sequentially connecting the first limiting point P1, the second limiting point P2, the third limiting point P3, and the fourth limiting point P4, includes a distribution of multiple theoretical wedge-angle values through which no reflected ghosting is observed when the central point of the projection image 211 is observed from different points on the perpendicular bisector of the first eyebox sub-plane EB12, a distribution of multiple theoretical wedge-angle values through which no reflected ghosting is observed when the central point of the projection image 211 is observed from different points on the perpendicular bisector of the second eyebox sub-plane EB13, and a distribution of multiple theoretical wedge-angle values through which no reflected ghosting is observed when the central point of the projection image 211 is observed from different points on the perpendicular bisector of the third eyebox sub-plane EB14. Therefore, there is a minimal deviation between the continuous curve of the actual wedge-angle fitting curve L0 located within the preset region S0 and the theoretical wedge-angle values through which no reflected ghosting is observed when the central point of the virtual image plane TB10 is dynamically observed along the perpendicular bisector of the eyebox plane EB10. That is, with the aid of the wedge angle of the projection display region 11, reflected ghosting can be reduced or eliminated when dynamically observing the central point of the projection image 211.

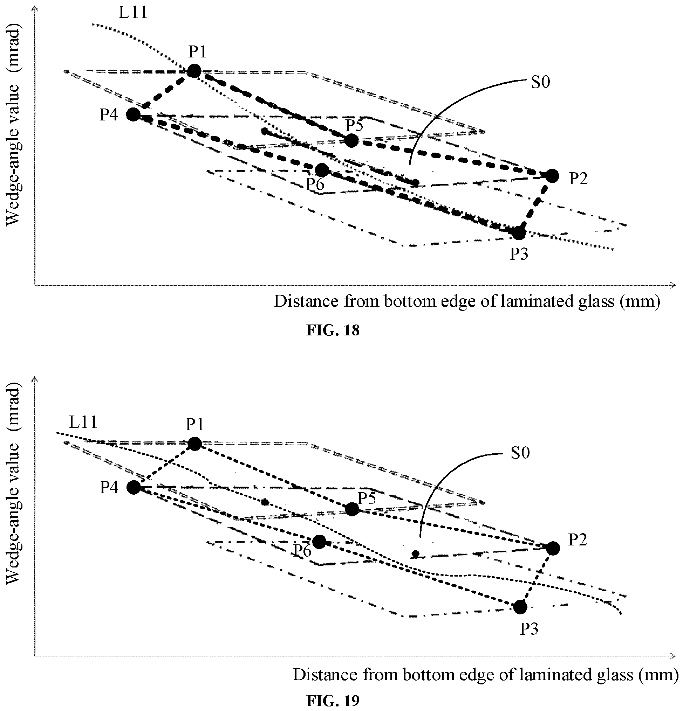

Referring to FIG. 18, FIG. 18 is a schematic diagram illustrating that the first variation curve adjusted in the method for designing the HUD system in FIG. 17 is further adjusted. In this embodiment, "after obtaining the first limiting point P1 according to the first limiting theoretical wedge-angle value and the distance from the first incident point to the bottom edge 12 of the laminated glass 10, obtaining the second limiting point P2 according to the second limiting theoretical wedge-angle value and the distance from the second incident point to the bottom edge 12 of the laminated glass 10, obtaining the third limiting point P3 according to the third limiting theoretical wedge-angle value and the distance from the third incident point to the bottom edge 12 of the laminated glass 10, and obtaining the fourth limiting point P4 according to the fourth limiting theoretical wedge-angle value and the distance from the fourth incident point to the bottom edge 12 of the laminated glass 10", "calculating the multiple limiting points according to the multiple theoretical wedge-angle values and the distances from the incident points corresponding to the multiple theoretical wedge-angle values to the bottom edge 12 of the laminated glass 10" further includes the following. A fifth line is obtained by connecting the top point of the perpendicular bisector of the first eyebox sub-plane EB12 and the central point of the first virtual image sub-plane TB12, where the fifth line intersects the at least one projection display region 10 at a fifth incident point. A sixth line is obtained by connecting a bottom point of the perpendicular bisector of the third eyebox sub-plane EB14 and the central point of the third virtual image sub-plane TB14, where the sixth line intersects the at least one projection display region 10 at a sixth incident point. A fifth limiting theoretical wedge-angle value at the fifth incident point, through which no reflected ghosting is observed, is calculated according to the projection assembly 20, the laminated glass 10, and the fifth line. A sixth limiting theoretical wedge-angle value at the sixth incident point, through which no reflected ghosting is observed, is calculated according to the projection assembly 20, the laminated glass 10, and the sixth line. The fifth limiting point P5 is obtained according to the fifth limiting theoretical wedge-angle value and a distance from the fifth incident point to the bottom edge 12 of the laminated glass 10. The sixth limiting point P6 is obtained according to the sixth limiting theoretical wedge-angle value and a distance from the sixth incident point to the bottom edge 12 of the laminated glass 10. Vertexes of the preset region S0 further include the fifth limiting point P5 and the sixth limiting point P6, where the preset region S0 is formed by sequentially connecting the first limiting point P1, the fifth limiting point P5, the second limiting point P2, the third limiting point P3, the sixth limiting point P6, and the fourth limiting point P4.

The calculations for the fifth limiting point P5 and the sixth limiting point P6 will be described in detail below.

The fifth line is obtained by connecting the top point of the perpendicular bisector of the first eyebox sub-plane EB12 and the central point of the first virtual image sub-plane TB12, where the fifth line intersects the at least one projection display region 10 at the fifth incident point. The sixth line is obtained by connecting the bottom point of the perpendicular bisector of the third eyebox sub-plane EB 14 and the central point of the third virtual image sub-plane TB14, where the sixth line intersects the at least one projection display region 10 at the sixth incident point.

The fifth limiting theoretical wedge-angle value at the fifth incident point, through which no reflected ghosting is observed, is calculated according to the projection assembly 20, the laminated glass 10, and the fifth line. The sixth limiting theoretical wedge-angle value at the sixth incident point, through which no reflected ghosting is observed, is calculated according to the projection assembly 20, the laminated glass 10, and the sixth line.

The fifth limiting point P5 is obtained according to the fifth limiting theoretical wedge-angle value and the distance from the fifth incident point to the bottom edge 12 of the laminated glass 10. The sixth limiting point P6 is obtained according to the sixth limiting theoretical wedge-angle value and the distance from the sixth incident point to the bottom edge 12 of the laminated glass 10.

In this embodiment, the preset region S0 is hexagonal, and formed by sequentially connecting the first limiting point P 1, the fifth limiting point P5, the second limiting point P2, the third limiting point P3, the sixth limiting point P6, and the fourth limiting point P4. Specifically, the preset region S0 and the first variation curve adjusted L11 are in the same coordinate system, with the horizontal axis representing a distance from the bottom edge 12 of the laminated glass 10 and the vertical axis representing a wedge-angle value.

According to the characteristics of projection imaging, at the first eyebox sub-plane EB12, as an observation point, from which the central point of the first virtual image sub-plane TB12 is observed, moves in a direction from the top point of the perpendicular bisector of the first eyebox sub-plane EB12 to the bottom point of the perpendicular bisector of the first eyebox sub-plane EB12, a distance from an intersection, of a line connecting the observation point and the central point of the first virtual image sub-plane TB12 and the projection display region 11, to the bottom edge 12 of the laminated glass 10 decreases, and the theoretical wedge-angle value required to eliminate reflected ghosting increases. Therefore, in the coordinate system of the first variation curve adjusted L11, a distribution of discrete points of the theoretical wedge-angle values, through which no reflected ghosting is observed when the central point of the first virtual image sub-plane TB12 is observed along the perpendicular bisector of the first eyebox sub-plane EB12, is located at the upper left of the fifth limiting point P5.

According to the characteristics of projection imaging, at the third eyebox sub-plane EB14, as an observation point, from which the central point of the third virtual image sub-plane TB14 is observed, moves in a direction from the bottom point of the perpendicular bisector of the third eyebox sub-plane EB 14 to the top point of the perpendicular bisector of the third eyebox sub-plane EB 14, a distance from an intersection, of a line connecting the observation point and the central point of the third virtual image sub-plane TB14 and the projection display region 11, to the bottom edge 12 of the laminated glass 10 increases, and the theoretical wedge-angle value required to eliminate reflected ghosting decreases. Therefore, in the coordinate system of the first variation curve adjusted L11, a distribution of discrete points of the theoretical wedge-angle values, through which no reflected ghosting is observed when the central point of the third virtual image sub-plane TB14 is observed along the perpendicular bisector of the third eyebox sub-plane EB14, is located at the lower right of the sixth limiting point P6.

Therefore, the preset region S0, formed by sequentially connecting the first limiting point P1, the fifth limiting point P5, the second limiting point P2, the third limiting point P3, the sixth limiting point P6, and the fourth limiting point P4, more accurately includes a distribution of multiple theoretical wedge-angle values through which no reflected ghosting is observed when the central point of the virtual image plane TB10 is observed from different points on the perpendicular bisector of the first eyebox sub-plane EB12, a distribution of multiple theoretical wedge-angle values through which no reflected ghosting is observed when the central point of the virtual image plane TB10 is observed from different points on the perpendicular bisector of the second eyebox sub-plane EB13, and a distribution of multiple theoretical wedge-angle values through which no reflected ghosting is observed when the central point of the virtual image plane TB10 is observed from different points on the perpendicular bisector of the third eyebox EB_T. Hence, there is a further reduced deviation between the continuous curve of the first variation curve adjusted L11 located within the preset region S0 and theoretical wedge-angle values through which no reflected ghosting is observed when the central point of the virtual image plane TB10 is dynamically observed along the perpendicular bisector of the eyebox plane EB10. That is, with the aid of the wedge angle of the projection display region 11, reflected ghosting can be further reduced or eliminated when dynamically observing the central point of the projection image 211.

Referring to FIG. 19, FIG. 19 is a schematic diagram illustrating that the first variation curve adjusted in the method for designing the HUD system in FIG. 18 is further adjusted. In this embodiment, a line connecting the first limiting point P1 and the fourth limiting point P4 serves as the first limiting line segment P1-P4, and a line connecting the second limiting point P2 and the third limiting point P3 serves as the second limiting line segment P2-P3. "Adjusting the first variation curve to enable the first variation curve adjusted to have the continuous curve located within the preset region" includes the following. The first variation curve is adjusted to enable the first variation curve adjusted to have the continuous curve located within the preset region S0, and to enable the first variation curve adjusted to intersect the first limiting line segment P1-P4 and/or the second limiting line segment P2-P3.

In this embodiment, the first variation curve L10 can be adjusted for optimization.

Specifically, the first variation curve L10 is adjusted to enable the first variation curve adjusted L11 to have the continuous curve located within the preset region S0, and to enable the first variation curve adjusted L11 to intersect the first limiting line segment P1-P4 and/or the second limiting line segment P2-P3.

In this embodiment, the first variation curve adjusted L11 intersects the first limiting line segment P1-P4, not only ensuring that the first variation curve adjusted L11 has the continuous curve located within the preset region S0, but also reducing a deviation between part of the first variation curve adjusted L11 located at the left of the first limiting line segment P1-P4 and theoretical wedge-angle values through which no reflected ghosting is observed when part of the first virtual image sub-plane TB12 adjacent to a bottom of the first virtual image sub-plane TB12 is observed from certain points on the perpendicular bisector of the first eyebox sub-plane EB12, and reducing a deviation between the part of the first variation curve adjusted L11 located at the left of the first limiting line segment P1-P4 and theoretical wedge-angle values through which no reflected ghosting is observed when part of the second virtual image sub-plane TB13 adjacent to a bottom of the second virtual image sub-plane TB13 is observed from certain points on the perpendicular bisector of the second eyebox sub-plane EB13.

In this embodiment, the first variation curve adjusted L11 intersects the second limiting line segment P2-P3, not only ensuring that the first variation curve adjusted L11 has the continuous curve located within the preset region S0, but also reducing a deviation between part of the first variation curve adjusted L11 located at the right of the second limiting line segment P2-P3 and theoretical wedge-angle values through which no reflected ghosting is observed when part of the second virtual image sub-plane TB13 adjacent to a top of the second virtual image sub-plane TB13 is observed from certain points on the perpendicular bisector of the second eyebox sub-plane EB13, and reducing a deviation between the part of the first variation curve adjusted L11 located at the right of the second limiting line segment P2-P3 and theoretical wedge-angle values through which no reflected ghosting is observed when part of the third virtual image sub-plane TB14 adjacent to a bottom of the third virtual image sub-plane TB14 is observed from certain points on the perpendicular bisector of the third eyebox sub-plane EB14.

Furthermore, in this embodiment, theoretical wedge-angle values, through which no reflected ghosting is observed when the central point of the first virtual image sub-plane TB12 is observed by the human eyes that move from the bottom point of the perpendicular bisector of the first eyebox sub-plane EB12 to the top point of the perpendicular bisector of the first eyebox sub-plane EB12 along the perpendicular bisector of the first eyebox sub-plane EB12, are distributed in the vicinity of the line connecting the first limiting point P1 and the fifth limiting point P5. Preferably, the first variation curve adjusted L11 extends in the vicinity of the line connecting the first limiting point P1 and the fifth limiting point P5. As such, reflected ghosting for dynamically observing a central region of the first virtual image sub-plane TB12 can be further reduced or even eliminated.

Furthermore, in this embodiment, theoretical wedge-angle values, through which no reflected ghosting is observed when the central point of the third virtual image sub-plane TB14 is observed by the human eyes that move from the bottom point of the perpendicular bisector of the third eyebox sub-plane EB14 to the top point of the perpendicular bisector of the third eyebox sub-plane EB 14 along the perpendicular bisector of the third eyebox sub-plane EB14, are distributed in the vicinity of the line connecting the third limiting point P3 and the sixth limiting point P6. Preferably, the first variation curve adjusted L11 extends in the vicinity of the line connecting the sixth limiting point P6 and the third limiting point P3. As such, reflected ghosting for dynamically observing a central region of the third virtual image sub-plane TB14 can be further reduced or even eliminated.

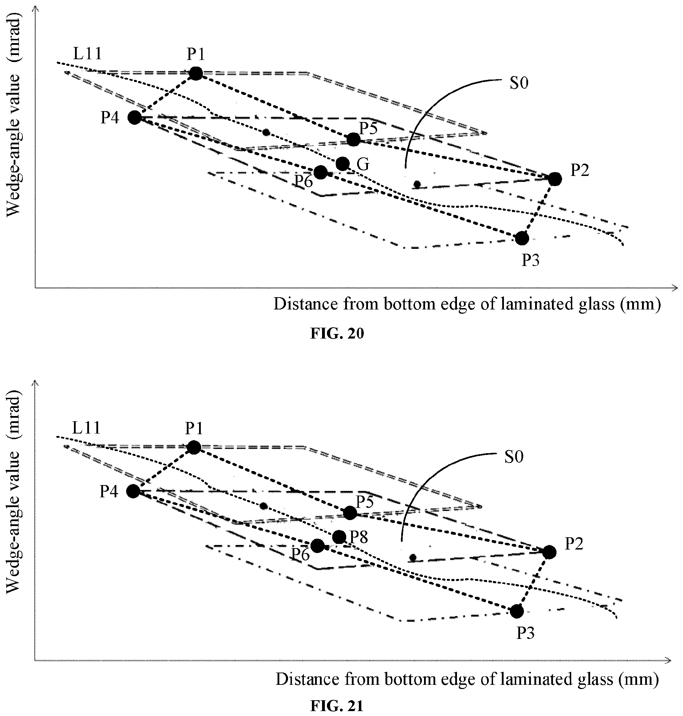

Referring to FIG. 20, FIG. 20 is a schematic diagram illustrating that the first variation curve adjusted in the method for designing the HUD system in FIG. 19 extends through a seventh limiting point. In this embodiment, the multiple limiting points are calculated according to the multiple theoretical wedge-angle values and the distances from the incident points corresponding to the multiple theoretical wedge-angle values to the bottom edge 12 of the laminated glass 10 as follows. Multiple seventh lines are obtained by connecting observation points on the perpendicular bisector of the second eyebox sub-plane EB13 and virtual image points on the second virtual image sub-plane TB13, where the multiple seventh lines intersect the at least one projection display region 11 at multiple seventh incident points. Multiple seventh limiting theoretical wedge-angle values at the multiple seventh incident points, through which no reflected ghosting is observed, are calculated according to the projection assembly 20, the laminated glass 10, and the multiple seventh lines. A distribution of discrete points is obtained according to the multiple seventh limiting theoretical wedge-angle values and distances from the multiple seventh incident points to the bottom edge 12 of the laminated glass 10. A seventh limiting point G is obtained by calculating a centroid of the distribution of the discrete points. The first variation curve L10 is adjusted to enable the first variation curve adjusted L11 to have the continuous curve located within the preset region S0 as follows. The first variation curve L10 is adjusted to enable the first variation curve adjusted L11 to have the continuous curve located within the preset region S0, and to enable the first variation curve adjusted L11 to extend through the seventh limiting point G.

The calculations for the seventh limiting point G and the adjustment of the first variation curve L10 will be described in detail below.

The multiple seventh lines are obtained by connecting the observation points on the perpendicular bisector of the second eyebox sub-plane EB13 and the virtual image points on the second virtual image sub-plane TB13, where the multiple seventh lines intersect the at least one projection display region 11 at the multiple seventh incident points.

The multiple seventh limiting theoretical wedge-angle values at the multiple seventh incident points, through which no reflected ghosting is observed, are calculated according to the projection assembly 20, the laminated glass 10, and the multiple seventh lines.

The distribution of the discrete points is obtained according to the multiple seventh limiting theoretical wedge-angle values and the distances from the multiple seventh incident points to the bottom edge 12 of the laminated glass 10. The seventh limiting point G is obtained by calculating the centroid of the distribution of the discrete points.

The first variation curve L10 is adjusted to enable the first variation curve adjusted L11 to have the continuous curve located within the preset region S0, and to enable the first variation curve adjusted L11 to extend through the seventh limiting point G.

In this embodiment, the first variation curve adjusted L11 extends through the seventh limiting point G. The seventh limiting point G is the centroid of distribution, in the coordinate system where the actual wedge-angle fitting curve L0 is located, of multiple theoretical wedge-angle values through which no reflected ghosting is observed when the second virtual image sub-plane TB13 is observed along the perpendicular bisector of the second eyebox sub-plane EB 13. In other words, there is minimal ghosting when the second virtual image sub-plane TB13 is observed along the perpendicular bisector of the second eyebox sub-plane EB 13. Since the second eyebox sub-plane EB13 represents a normal eye height of the driver inside the cabin, it ensures that when the vehicle experiences minor bumps or no bumps, minimal ghosting will be observed during a dynamical observation by the driver of the projection image 211.

Referring to FIG. 21, FIG. 21 is a schematic diagram illustrating that the first variation curve adjusted in the method for designing the HUD system in FIG. 19 extends through the seventh limiting point. The multiple limiting points are calculated according to the multiple theoretical wedge-angle values and the distances from the incident points corresponding to the multiple theoretical wedge-angle values to the bottom edge 12 of the laminated glass 10 as follows. An eighth line is obtained by connecting a midpoint of the perpendicular bisector of the second eyebox sub-plane EB 13 and a central point of the second virtual image sub-plane TB 13, where the eighth line intersects the at least one projection display region 11 at an eighth incident point. An eighth limiting theoretical wedge-angle value at the eighth incident point, through which no reflected ghosting is observed, is calculated according to the projection assembly 20, the laminated glass 10, and the eighth line. An eighth limiting point P8 is obtained according to the eighth limiting theoretical wedge-angle value and a distance from the eighth incident point to the bottom edge 12 of the laminated glass 10. The first variation curve L10 is adjusted to enable the first variation curve adjusted L11 to have the continuous curve located within the preset region S0 as follows. The first variation curve L10 is adjusted to enable the first variation curve adjusted L11 to have the continuous curve located within the preset region S0, and to enable the first variation curve adjusted L11 to extend through the eighth limiting point P8.

The calculations for the eighth limiting point P8 and the adjustment of the first variation curve L10 will be described in detail below.

The eighth line is obtained by connecting the midpoint of the perpendicular bisector of the second eyebox sub-plane EB13 and the central point of the second virtual image sub-plane TB13, where the eighth line intersects the at least one projection display region 11 at the eighth incident point.

The eighth limiting theoretical wedge-angle value at the eighth incident point, through which no reflected ghosting is observed, is calculated according to the projection assembly 20, the laminated glass 10, and the eighth line. The eighth limiting point is obtained according to the eighth limiting theoretical wedge-angle value and the distance from the eighth incident point to the bottom edge 12 of the laminated glass 10.

The eighth limiting point P8 is obtained according to the eighth limiting theoretical wedge-angle value and the distance from the eighth incident point to the bottom edge 12 of the laminated glass 10.

The first variation curve L10 is adjusted to enable the first variation curve adjusted L11 to have the continuous curve located within the preset region S0, and to enable the first variation curve adjusted L11 to extend through the eighth limiting point P8.

In this embodiment, the first variation curve adjusted L11 extends through the eighth limiting point P8. In a vehicle, the driver's eyes are typically at a central point of the second eyebox sub-plane EB13. Meanwhile, information with higher importance is generally displayed at the central point of the projection image 211 (i.e., the central point of the second virtual image sub-plane TB13). Therefore, it is important that no reflected ghosting is observed when the central point of the projection image 211 is observed by the driver's eyes at the central point of the second eyebox sub-plane EB13. Therefore, the first variation curve adjusted L11 extending through the eighth limiting point P8 facilitates the observation for the projection image 211 by the driver's eyes at the normal position while driving the vehicle.

Referring to FIG. 15 again, in this embodiment, a ratio of a maximum local range ΔW of the multiple theoretical wedge-angle values to a global range ΔC of the multiple theoretical wedge-angle values is: ΔW/ΔC ≤ 0.9.

The ratio of the maximum local range ΔW of the multiple theoretical wedge-angle values to the global range ΔC of the multiple theoretical wedge-angle values is: ΔW/ΔC ≤ 0.9. This can reduce a dispersion degree of the multiple theoretical wedge-angle values, thereby reducing a dispersion degree of the discrete map and improving a smoothness of the actual wedge-angle fitting curve L0. That is, a slope of the actual wedge-angle fitting curve L0 is reduced, thereby reducing a wedge-angle variation rate of the laminated glass 10 and lowering the production difficulty of the laminated glass 10. It may be noted that the maximum local range ΔW of the multiple theoretical wedge-angle values refers to the maximum value among local ranges, where the local range refers to a difference between the maximum value and the minimum value among the multiple theoretical wedge-angle values at a certain position with a distance X from the bottom edge 12 of the laminated glass 10. The global range ΔC of the multiple theoretical wedge-angle values refers to a difference between the maximum value and the minimum value among all theoretical wedge-angle values.

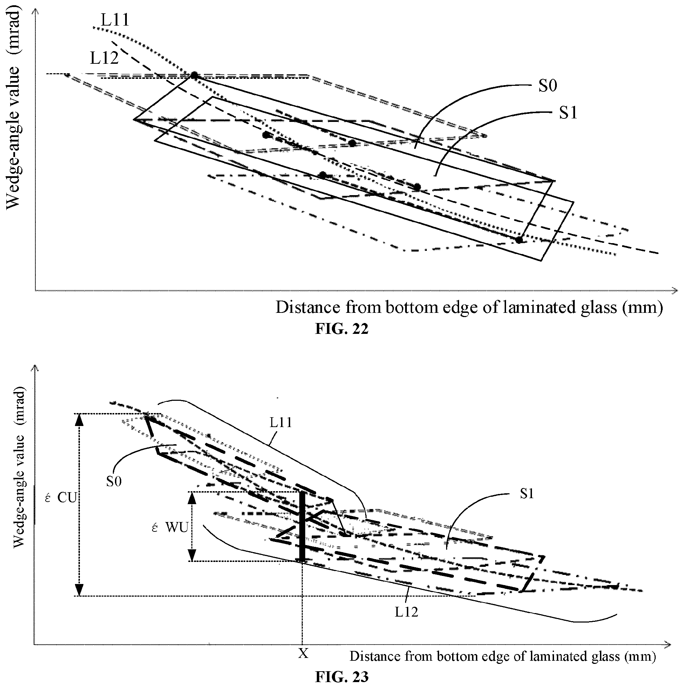

Referring to FIG. 22, FIG. 22 is a schematic diagram illustrating that two adjacent first variation curves adjusted for the same type of projection display region in the method for designing the HUD system in FIG. 13. In this embodiment, the at least one projection display region 11 includes at least two first projection display regions 114 or at least two second projection display regions 115, at least two first variation curves adjusted L11 that the wedge angle varies with distances from incident points to the bottom edge 12 of the laminated glass 10 are obtained through fitting. When a maximum deviation value between two adjacent first variation curves adjusted L11 is greater than 0.15 mrad, after "determining the wedge-angle value of the laminated glass 10 in each of the at least one projection display region 11 according to the first variation curve adjusted L 11", the method further includes the following. A distance between the eyebox plane EB10 and the virtual image plane TB10 corresponding to one of the two adjacent first variation curves adjusted L11 is adjusted. Multiple new theoretical wedge-angle values are recalculated out. A new first variation curve L10, that the wedge angle varies with the distances from the incident points to the bottom edge 12 of the laminated glass 10, is obtained by fitting the multiple new theoretical wedge-angle values and distances from incident points corresponding to the multiple new theoretical wedge-angle values to the bottom edge 12 of the laminated glass 10. A new preset region S1 is recalculated out. The new first variation curve L10 is adjusted to enable the new first variation curve adjusted L12 to have a continuous curve located within the new preset region S 1. Whether a maximum deviation value between the new first variation curve adjusted L12 and another one of the two adjacent first variation curves adjusted L11 is less than or equal to 0.15 mrad is judged. If not, above operations are repeated. If yes, wedge-angle values of the laminated glass 10 in each of the at least two first projection display regions 114 or each of the at least two second projection display regions 115 are determined according to the new first variation curve adjusted L12.

In this embodiment, in the case where the two adjacent first variation curves adjusted L11 have overlapping parts, the maximum deviation value is equal to the maximum value of differences between the two first variation curves adjusted L11 in the overlapping parts; in the case where two adjacent first variation curves adjusted L11 have no overlapping parts, the maximum deviation value is equal to a difference between wedge-angle values of two closest ends of the two adjacent first variation curves adjusted L11.

In the case where the maximum deviation value is greater than 0.15 mrad, it is necessary to adjust a distance between the eyebox plane EB 10 and the virtual image plane TB10 corresponding to any one of the two adjacent first variation curves adjusted L11, to adjust the maximum deviation value between the designed two first variation curves adjusted L11 to be less than or equal to 0.15 mrad, or less than or equal to 0.10 mrad, or less than or equal to 0.08 mrad, or less than or equal to 0.05 mrad.

Specifically, after "determining the wedge-angle value of the laminated glass 10 in each of the at least one projection display region 11 according to the first variation curve adjusted L11", it is necessary to adjust at least one of the two adjacent first variation curves adjusted L11.

The distance between the eyebox plane EB10 and the virtual image plane TB10 corresponding to one of the two adjacent first variation curves adjusted L11 is adjusted.

Adjusting the distance between the eyebox plane EB10 and the virtual image plane TB10 corresponding to one of the two adjacent first variation curves adjusted L11 can adjust the wedge-angle value required to eliminate reflected ghosting. Under the same conditions, the greater the distance between the eyebox plane EB10 and the virtual image plane TB10 corresponding to one of the two adjacent first variation curves adjusted L11, the smaller the wedge-angle value required to eliminate reflected ghosting. In this embodiment, the distance between the eyebox plane EB10 and the virtual image plane TB10 corresponding to one of the two adjacent first variation curves adjusted L11 can be increased, and/or the distance between the eyebox plane EB10 and the virtual image plane TB10 corresponding to another one of the two adjacent first variation curves adjusted L11 can be reduced, thereby making the two adjacent first variation curves adjusted L11 closer to the design target.

New multiple theoretical wedge-angle values can be recalculated out.

In this embodiment, after the distance between the virtual image plane TB10 and the eyebox plane EB10 is adjusted, a new first variation curve L10 closer to the design target can be obtained by fitting the multiple theoretical wedge-angle values calculated through the method provided in the foregoing embodiments.

The new first variation curve L10, that the wedge angle varies with the distances from the incident points to the bottom edge 12 of the laminated glass 10, is obtained by fitting the multiple new theoretical wedge-angle values and distances from incident points corresponding to the multiple new theoretical wedge-angle values to the bottom edge 12 of the laminated glass 10. The new preset region S1 is recalculated out.

The new first variation curve L10 is adjusted to enable the new first variation curve adjusted L12 to have a continuous curve located within the new preset region S1.

Whether the maximum deviation value between the new first variation curve adjusted L12 and another one of the two adjacent first variation curves adjusted L11 is less than or equal to 0.15 mrad is judged.

In this embodiment, whether the maximum deviation value between the new first variation curve L10 and the other one of the two adjacent first variation curves adjusted L11 is less than or equal to 0.15 mrad is determined. If the maximum deviation value is greater than 0.15 mrad, operations of adjusting the distance between the eyebox plane EB 10 and the virtual image plane TB10 corresponding to one of the two adjacent first variation curves adjusted L11 are repeatedly carried out. If the maximum deviation value is less than or equal to 0.15 mrad, the wedge-angle values are selected.

The wedge-angle value of the laminated glass 10 in the first projection display region 114 or the second projection display region 115 is determined according to the new first variation curve adjusted L12.

Referring to FIG. 23, FIG. 23 is a schematic diagram illustrating two adjacent first variation curves adjusted for different types of projection display regions in the method for designing the HUD system in FIG. 13. In this embodiment, the at least one projection display region includes at least two first projection display regions or at least two second projection display regions, at least two first variation curves adjusted that the wedge angle varies with distances from incident points to the bottom edge of the laminated glass are obtained through fitting. When a maximum deviation value between two adjacent first variation curves adjusted is greater than 0.2 mrad, after "determining the wedge-angle value of the laminated glass in each of the at least one projection display region according to the first variation curve adjusted", the method further includes the following. A distance between the eyebox plane and a virtual image plane corresponding to one of the two adjacent first variation curves adjusted is adjusted. Multiple new theoretical wedge-angle values are recalculated out. A new first variation curve, that the wedge angle varies with the distances from the incident points to the bottom edge of the laminated glass, is obtained by fitting the multiple new theoretical wedge-angle values and distances from incident points corresponding to the multiple new theoretical wedge-angle values to the bottom edge of the laminated glass. A new preset region is recalculated out. The new first variation curve is adjusted to enable the new first variation curve adjusted to have a continuous curve located within the new preset region. Whether a maximum deviation value between the new first variation curve adjusted and another one of the two adjacent first variation curves adjusted is less than or equal to 0.2 mrad is judged. If not, above operations are repeated. If yes, wedge-angle values of the laminated glass in each of the at least two first projection display regions or each of the at least two second projection display regions are determined according to the new first variation curve adjusted.

In this embodiment, in the case where the two adjacent first variation curves adjusted L11 have overlapping parts, the maximum deviation value is equal to the maximum value of differences between the two first variation curves adjusted L11 in the overlapping parts; in the case where two adjacent first variation curves adjusted L11 have no overlapping parts, the maximum deviation value is equal to a difference between wedge-angle values of two closest ends of the two adjacent first variation curves adjusted L11.

In the case where the maximum deviation value is greater than 0.2 mrad, it is necessary to adjust a distance between the eyebox plane EB10 and the virtual image plane TB10 corresponding to any one of the two adjacent first variation curves adjusted L11, to adjust the maximum deviation value between the designed two first variation curves adjusted L11 to be less than or equal to 0.2 mrad, or less than or equal to 0.15 mrad, or less than or equal to 0.10 mrad, or less than or equal to 0.08 mrad, or less than or equal to 0.05 mrad.

Specifically, after "determining the wedge-angle value of the laminated glass 10 in each of the at least one projection display region 11 according to the first variation curve adjusted L11", it is necessary to adjust at least one of the two adjacent first variation curves adjusted L11.

The distance between the eyebox plane EB10 and the virtual image plane TB10 corresponding to one of the two adjacent first variation curves adjusted L11 is adjusted.

Adjusting the distance between the eyebox plane EB10 and the virtual image plane TB10 corresponding to one of the two adjacent first variation curves adjusted L11 can adjust the wedge-angle value required to eliminate reflected ghosting. Under the same conditions, the greater the distance between the eyebox plane EB10 and the virtual image plane TB10 corresponding to one of the two adjacent first variation curves adjusted L11, the smaller the wedge-angle value required to eliminate reflected ghosting. In this embodiment, the distance between the eyebox plane EB10 and the virtual image plane TB10 corresponding to one of the two adjacent first variation curves adjusted L11 can be increased, and/or the distance between the eyebox plane EB10 and the virtual image plane TB10 corresponding to another one of the two adjacent first variation curves adjusted L11 can be reduced, thereby making the two adjacent first variation curves adjusted L11 closer to the design target.

New multiple theoretical wedge-angle values can be recalculated out.

In this embodiment, after the distance between the virtual image plane TB10 and the eyebox plane EB10 is adjusted, the new first variation curve L10 closer to the design target can be obtained by fitting the multiple theoretical wedge-angle values calculated through the method provided in the foregoing embodiments.

The new first variation curve L10, that the wedge angle varies with the distances from the incident points to the bottom edge 12 of the laminated glass 10, is obtained by fitting the multiple new theoretical wedge-angle values and distances from incident points corresponding to the multiple new theoretical wedge-angle values to the bottom edge 12 of the laminated glass 10. The new preset region S1 is recalculated out.

The new first variation curve L10 is adjusted to enable the new first variation curve adjusted L12 to have a continuous curve located within the new preset region S1.

Whether the maximum deviation value between the new first variation curve adjusted L12 and another one of the two adjacent first variation curves adjusted L11 is less than or equal to 0.2 mrad is judged.

In this embodiment, whether the maximum deviation value between the new first variation curve adjusted L12 and the other one of the two adjacent first variation curves adjusted L11 is less than or equal to 0.2 mrad is determined. If the maximum deviation value is greater than 0.2 mrad, operations of adjusting the distance between the eyebox plane EB 10 and the virtual image plane TB10 corresponding to one of the two adjacent first variation curves adjusted L11 are repeatedly carried out. If the maximum deviation value is less than or equal to 0.2 mrad, the wedge-angle values are selected.

The wedge-angle value of the laminated glass 10 in the first projection display region 114 or the second projection display region 115 is determined according to the new first variation curve adjusted L12.

Referring to FIG. 23 again, in this embodiment, a ratio of a maximum local range ΔWU in a set of multiple adjusted theoretical wedge-angle values to a global range ΔCU in the set of the multiple adjusted theoretical wedge-angle values is: ΔWU/ΔCU ≤ 0.9.

There is the maximum local range ΔWU in the set of the multiple adjusted theoretical wedge-angle values corresponding to the first projection display region 114, there is the global range ΔCU in the set of the multiple adjusted theoretical wedge-angle values corresponding to the second projection display region 115, and the ratio of the maximum local range ΔWU to the global range ΔCU satisfies ΔWU/ΔCU ≤ 0.9. This can reduce an overall dispersion degree of the multiple theoretical wedge-angle values, thereby improving a smoothness of the first variation curve adjusted L11 and a smoothness of the new first variation curve adjusted L12. That is, an overall slope of the first variation curve adjusted L11 and an overall slope of the new first variation curve adjusted L12 are reduced, thereby reducing an overall wedge-angle variation rate of the laminated glass 10 and lowering the production difficulty of the laminated glass 10. It may be noted that the maximum local range ΔWU in the set of the multiple theoretical wedge-angle values refers to the maximum value in a set of local ranges, where the set of the local range refers to a set of a difference between the maximum value and the minimum value in the set of the multiple theoretical wedge-angle values at a certain position with a distance X from the bottom edge 12 of the laminated glass 10. The global range ΔCU in the set of the multiple theoretical wedge-angle values refers to a difference between the maximum value and the minimum value in the set of the all theoretical wedge-angle values.

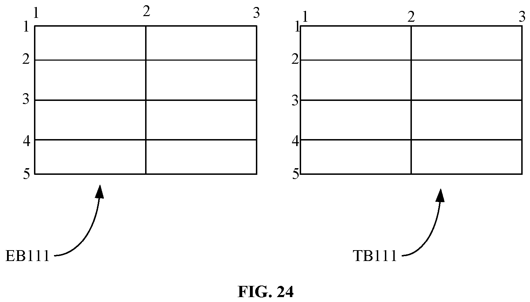

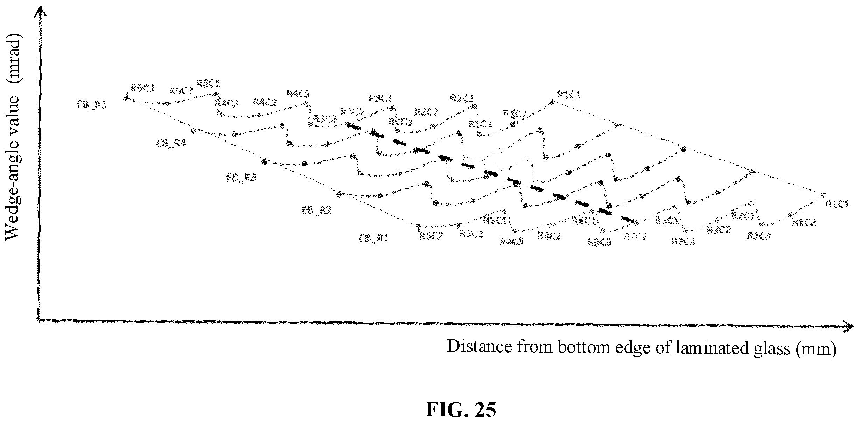

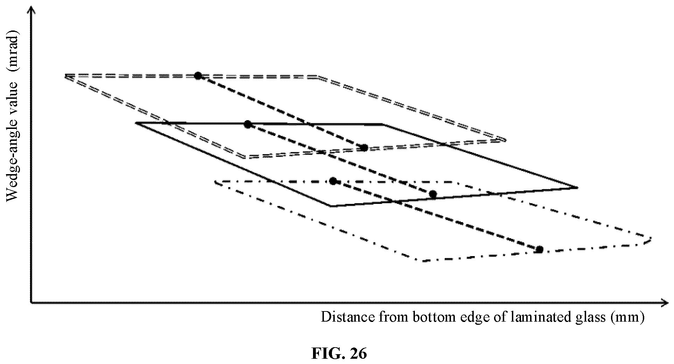

Referring to FIGS. 24 to 26, FIG. 24 is a schematic diagram illustrating the observation point array and the virtual image point array in the method for designing the HUD system provided in an embodiment of the disclosure, FIG. 25 is a diagram illustrating distribution of discrete points of multiple theoretical wedge-angle values in the method for designing the HUD system in FIG. 24, where with the multiple theoretical wedge-angle values, no ghosting is observed when the second virtual image sub-plane is observed from the perpendicular bisector of the second eyebox sub-plane, and FIG. 26 is a diagram illustrating distribution of discrete points of multiple theoretical wedge-angle values in the method for designing the HUD system in FIG. 24, where with the multiple theoretical wedge-angle values, no ghosting is observed when three virtual image sub-planes are observed from perpendicular bisectors of three eyebox sub-planes.

In an embodiment of the disclosure, it is schematically illustrated that the at least one projection display region 11 includes one first projection display region 114 and one second projection display region 115. The first projection display region 114 corresponds to AR-HUD and has a projection display distance of 10000 mm. The second projection display region 115 corresponds to W-HUD and has a projection display distance of 3200 mm.

The laminated glass 10 includes a first transparent substrate, an intermediate adhesive layer, and a second transparent substrate. The maximum thickness of the first transparent substrate is 1.8 mm, the maximum thickness of the intermediate adhesive layer is 0.76 mm, and the maximum thickness of the second transparent substrate is 1.8 mm. An installation angle of the laminated glass 10 when installed on the front windshield of the vehicle is 27°.

A vertical curvature of each of the first projection display region 114 and the second projection display region 115 ranges from R5400 mm to R5500 mm, and a transverse curvature of each of the first projection display region 114 and the second projection display region 115 ranges from R2500 mm to R2550 mm.

The eyebox plane EB10 has a dimension of 120 mm*50 mm, where a central point of the first eyebox sub-plane EB12 is lower than the central point of the second eyebox sub-plane EB13 by 40 mm, and a central point of the third eyebox sub-plane EB14 is higher than the central point of the second eyebox sub-plane EB13 by 40 mm.

For the first projection display region 114, a downward field of view of the first eyebox sub-plane EB12 is -1°, a downward field of view of the second eyebox sub-plane EB13 is -2.6°, and a downward field of view of the third eyebox sub-plane EB14 is -4.2°. For each of the first eyebox sub-plane EB12, the second eyebox sub-plane EB13, and the third eyebox sub-plane EB14, a horizontal field of view is 0°, and a field of view is 10×4°. A distance from the central point of the second eyebox sub-plane EB13 to an intersection of a main optical axis of the first projection light source 212 and a surface, adjacent to the vehicle interior, of the laminated glass 10 is 826 mm, and the incident angle of the first projection light source 212 is 68°.

For the second projection display region 115, the downward field of view of the first eyebox sub-plane EB12 is -3.9°, the downward field of view of the second eyebox sub-plane EB13 is -5.5°, and the downward field of view of the third eyebox sub-plane EB14 is -7.3°. For each of the first eyebox sub-plane EB12, the second eyebox sub-plane EB13, and the third eyebox sub-plane EB14, the horizontal field of view is 0°, and the field of view angle is 7×2°. A distance from the central point of the second eyebox sub-plane EB13 to an intersection of a main optical axis of the second projection light source 213 and the surface, adjacent to the vehicle interior, of the laminated glass 10 is 933 mm, and the incident angle of the first projection light source 212 is 66°.

On each of the first eyebox sub-plane EB12, the second eyebox sub-plane EB13, and the third eyebox sub-plane EB14, the observation point array EB111 (m * n) is a 5×3 array (*see* FIG. 24). On each of two first virtual image sub-planes TB12, the two second virtual image sub-planes TB13, and the two third virtual image sub-planes TB14, the virtual image point array TB111 (i * j) is also a 5×3 array. According to the method for designing the HUD system 1 in the foregoing embodiments, the theoretical wedge-angle values for eliminating ghosting for the first projection display region 114 and the second projection display region 115 are calculated out in sequence and made into diagrams of distribution of discrete points. In an example, as illustrated in FIG. 5, a diagram of distributions of discrete points is made based on points on the perpendicular bisector of the second eyebox sub-plane EB13 and points on the second virtual image sub-plane TB13 corresponding to the points on the perpendicular bisector of the second eyebox sub-plane EB13, where EB_Rm represents the points on the perpendicular bisector of the second eyebox sub-plane EB13, RiCj represents the points on the second virtual image sub-plane TB13, and a combination of EB_Rm and RiCj represents theoretical wedge-angle values through which no ghosting is observed when RiCj is observed from RiCj. m = 1, 2, 3, 4, 5. i = 1, 2, 3, 4, 5. j = 1, 2, 3. Additionally, a distribution law of discrete points of theoretical wedge-angle values through which no reflected ghosting is observed when the first virtual image sub-plane TB12 is observed along the perpendicular bisector of the first eyebox sub-plane EB12 is the same as that in FIG. 25, and a distribution law of discrete points of theoretical wedge-angle values through which no reflected ghosting is observed when the third virtual image sub-plane TB14 is observed along the perpendicular bisector of the third eyebox sub-plane EB14 is the same as that in FIG. 25, and thus distributions of discrete points illustrated in FIG. 26 can be calculated out. Furthermore, a distribution law of discrete points of theoretical wedge-angle values through which no ghosting is observed when the virtual image plane TB10 is observed from points on lines on the eyebox plane EB10, that are parallel to the perpendicular bisector of the eyebox plane EB10, is approximately the same as that is FIG. 26, and thus distributions of discrete points can be calculated out. Finally, 1350 theoretical wedge-angle values can be calculated out, with the maximum value of 0.602 mrad corresponding to a distance of 289.3 mm from the bottom edge 12 of the laminated glass 10. The minimum value is 0.14 mrad corresponding to a distance of 615.5 mm from the bottom edge 12 of the laminated glass 10. In addition, the global range ΔCU of the 1350 theoretical wedge-angle values is 0.462 mrad.

According to the method for designing the HUD system 1, the first limiting point P1(AR), the second limiting point P2(AR), the third limiting point P3(AR), the fourth limiting point P4(AR), the fifth limiting point P5(AR), the sixth limiting point P6(AR), and the seventh limiting point G(AR) for eliminating ghosting of the first HUD system 1 can be calculated out. Details are illustrated in the table below.

| Position | Distance from bottom edge 12 of laminated glass (mm) | Wedge-angle value Y at position (mrad) |
|---|---|---|
| P1(AR) | 445.141 | 0.345 |
| P5(AR) | 544.072 | 0.278 |
| P2(AR) | 663.976 | 0.236 |
| P3(AR) | 647.283 | 0.155 |
| P6(AR) | 511.566 | 0.219 |
| P4(AR) | 387.360 | 0.298 |
| G(AR) | 530.435 | 0.247 |

According to the method for designing the HUD system 1, the first limiting point P1(W), the second limiting point P2(W), the third limiting point P3(W), the fourth limiting point P4(W), the fifth limiting point P5(W), the sixth limiting point P6(W), and the seventh limiting point G(W) for eliminating ghosting of the second HUD system 1 can be calculated out. Details are illustrated in the table below.

| Position | Distance from bottom edge 12 of laminated glass (mm) | Wedge-angle value Y at position (mrad) |
|---|---|---|
| P1(W) | 346.994 | 0.522 |
| P5(W) | 428.899 | 0.398 |
| P2(W) | 520.667 | 0.301 |
| P3(W) | 510.777 | 0.224 |
| P6(W) | 393.919 | 0.344 |
| P4(W) | 314.097 | 0.479 |
| G(W) | 413.730 | 0.369 |

The first variation curve adjusted L11 may be obtained by fitting and adjusting according to a fitting function Y=-6.811248E-09X³+1.276708E-05X²-8.413138E-03X+2.138185, where X = 288 mm~740 mm, Y = 0.61 mrad ~ 0.14 mrad. The first variation curve adjusted L11 extends through a region of P1(W)-PS(W)-P2(W)-P3(W)-P6(W)-P4(W) and a region of P1(AR)-P5(AR)-P2(AR)-P3(AR)-P6(AR)-P4(AR), and crosses out between a line of P1(W)-P4(W) and a line of P2(AR)-P3(AR). Additionally, ΔWU is approximately 0.24 mrad, and ΔWU/ΔCU is approximately 0.52. Therefore, selecting the wedge-angle values for the first projection display region 114 and the second projection display region 115 according to the first variation curve adjusted L11 can significantly reduce dynamic ghosting.

It may be noted that, the embodiments and drawings of the disclosure illustrate the HUD system and the method for designing the HUD system where the projection display region is located on the left side. However, the disclosure is not limited thereto and is also applicable to a HUD system and a method for designing the system where the projection display region is located on the right side.

Although the embodiments of the disclosure have been illustrated and described above, it can be understood that the above embodiments are exemplary and cannot be understood as limitations on the disclosure. Those skilled in the art can make changes, modifications, replacements, and variations for the above embodiments within the scope of the disclosure, and these improvements and modifications are also considered to fall into the protection scope of the disclosure.

## Claims

1. A head-up display (HUD) system, comprising a laminated glass and a projection assembly, wherein:
the laminated glass has at least one projection display region, wherein in the case where the laminated glass is mounted to a vehicle, each of the at least one projection display region has a wedge-shaped cross-section in which a thickness of an upper side edge is greater than a thickness of a lower side edge, and has a zone in which a wedge angle decreases in a direction from the lower side edge to the upper side edge, and at each of a plurality of points within the zone, there are a measured wedge-angle value and a plurality of theoretical wedge-angle values, wherein with the plurality of theoretical wedge-angle values reflected ghosting is eliminated;
an actual wedge-angle fitting curve is obtained by fitting the measured wedge-angle values at the plurality of points within the zone, a plurality of limiting points are calculated according to the plurality of theoretical wedge-angle values at each point within the zone and a distance from an incident point corresponding to each of the plurality of theoretical wedge-angle values to a bottom edge of the laminated glass, a preset region is formed by sequentially connecting the plurality of limiting points, and the actual wedge-angle fitting curve has a continuous curve located within the preset region; and
the projection assembly comprises at least one projection light source capable of projecting light onto the at least one projection display region, wherein projection light emitted by the at least one projection light source is incident onto the at least one projection display region to form a projection image.

2. The HUD system of claim 1, wherein a first variation curve is obtained by fitting the plurality of theoretical wedge-angle values at each point within the zone, and a maximum deviation value between the actual wedge-angle fitting curve and the first variation curve is less than or equal to 0.15 mrad.

3. The HUD system of claim 2, wherein the wedge angle within the zone decreases non-linearly in a direction from the lower side edge to the upper side edge, and both the actual wedge-angle fitting curve and the first variation curve conform to a first to fourth order function.

4. The HUD system of claim 1, wherein the HUD system comprises a first eyebox, a second eyebox, and a third eyebox which are sequentially arranged from low to high, and the projection image comprises a first projection sub-image, a second projection sub-image, and a third projection sub-image which are sequentially arranged from high to low, wherein
the preset region is a polygon, and the plurality of limiting points comprise a first limiting point, a second limiting point, a third limiting point, and a fourth limiting point;
a first line is obtained by connecting a bottom point of a perpendicular bisector of the first eyebox and a central point of the first projection sub-image, and coordinates of the first limiting point comprise a distance from an intersection of the first line and the at least one projection display region to the bottom edge of the laminated glass, and a theoretical wedge-angle value through which no reflected ghosting is observed when the central point of the first projection sub-image is observed from the bottom point of the perpendicular bisector of the first eyebox;
a second line is obtained by connecting a top point of a perpendicular bisector of the second eyebox and an upper left corner point of the second projection sub-image, and coordinates of the second limiting point comprise a distance from an intersection of the second line and the at least one projection display region to the bottom edge of the laminated glass, and a theoretical wedge-angle value through which no reflected ghosting is observed when the upper left corner point of the second projection sub-image is observed from the top point of the perpendicular bisector of the second eyebox;
a third line is obtained by connecting a top point of a perpendicular bisector of the third eyebox and a central point of the third projection sub-image, and coordinates of the third limiting point comprise a distance from an intersection of the third line and the at least one projection display region to the bottom edge of the laminated glass, and a theoretical wedge-angle value through which no reflected ghosting is observed when the central point of the third projection sub-image is observed from the top point of the perpendicular bisector of the third eyebox; and
a fourth line is obtained by connecting a bottom point of the perpendicular bisector of the second eyebox and a lower right corner point of the second projection sub-image, and coordinates of the fourth limiting point comprise a distance from an intersection of the fourth line and the at least one projection display region to the bottom edge of the laminated glass, and a theoretical wedge-angle value through which no reflected ghosting is observed when the lower right corner point of the second projection sub-image is observed from the bottom point of the perpendicular bisector of the second eyebox.

5. The HUD system of claim 4, wherein the plurality of limiting points further comprise a fifth limiting point and a sixth limiting point, and the preset region is formed by sequentially connecting the first limiting point, the fifth limiting point, the second limiting point, the third limiting point, the sixth limiting point, and the fourth limiting point;
a fifth line is obtained by connecting a top point of the perpendicular bisector of the first eyebox and the central point of the first projection sub-image, and coordinates of the fifth limiting point comprise a distance from an intersection of the fifth line and the at least one projection display region to the bottom edge of the laminated glass, and a theoretical wedge-angle value through which no reflected ghosting is observed when the central point of the first projection sub-image is observed from the top point of the perpendicular bisector of the first eyebox; and
a sixth line is obtained by connecting a bottom point of the perpendicular bisector of the third eyebox and the central point of the third projection sub-image, and coordinates of the sixth limiting point comprise a distance from an intersection of the sixth line and the at least one projection display region to the bottom edge of the laminated glass, and a theoretical wedge-angle value through which no reflected ghosting is observed when the central point of the third projection sub-image is observed from the bottom point of the perpendicular bisector of the third eyebox.

6. The HUD system of claim 4, wherein a first limiting line segment is formed by connecting the first limiting point and the fourth limiting point, a second limiting line segment is formed by connecting the second limiting point and the third limiting point, and the actual wedge-angle fitting curve intersects the first limiting line segment and/or the second limiting line segment.

7. The HUD system of any one of claims 4 to 6, wherein the actual wedge-angle fitting curve extends through a seventh limiting point, wherein the seventh limiting point is a centroid of distribution, in a coordinate system where the actual wedge-angle fitting curve is located, of a plurality of theoretical wedge-angle values through which no reflected ghosting is observed when the second projection sub-image is observed from each point of the perpendicular bisector of the second eyebox.

8. The HUD system of any of claims 4 to 6, wherein the actual wedge-angle fitting curve extends through an eighth limiting point, wherein an eighth line is obtained by connecting a midpoint of the perpendicular bisector of the second eyebox and a central point of the second projection sub-image, and coordinates of the eighth limiting point comprise a distance from an intersection of the eighth line and the at least one projection display region to the bottom edge of the laminated glass, and a theoretical wedge-angle value through which no reflected ghosting is observed when the central point of the second projection sub-image is observed from the midpoint of the perpendicular bisector of the second eyebox.

9. The HUD system of claim 1, wherein in a direction from the bottom edge to a top edge of the laminated glass, a ratio of a length of the zone to a length of the at least one projection display region is not less than 70%.

10. The HUD system of claim 1, wherein the at least one projection display region comprises:
at least one first projection display region, wherein the at least one projection light source is configured to project light onto the at least one first projection display region to form a first projection image, and a virtual image distance of the first projection image ranges from 7 meters to 100 meters; and
at least one second projection display region, wherein the at least one projection light source is configured to project light onto the at least one second projection display region to form a second projection image, and a virtual image distance of the second projection image ranges from 1 meter to 6 meters.

11. The HUD system of claim 10, wherein the projection assembly comprises at least one first projection light source and at least one second projection light source, wherein the at least one first projection light source is configured to project light onto the at least one first projection display region, and the at least one second projection light source is configured to project light onto the at least one second projection display region.

12. A method for designing a head-up display (HUD) system, comprising:
providing a projection assembly and a laminated glass, wherein projection light emitted by the projection assembly is incident onto at least one projection display region of the laminated glass;
designing an eyebox plane inside a vehicle according to an observer inside the vehicle;
designing a virtual image plane according to a projection image observed by the observer inside the vehicle through each of the at least one projection display region;
wherein the eyebox plane comprises a plurality of eyebox sub-planes arranged from low to high, and the virtual image plane comprises a plurality of virtual image sub-planes arranged from high to low, wherein the plurality of virtual image sub-planes are in one-to-one correspondence with the plurality of eyebox sub-planes;
selecting an observation point array on each of the plurality of eyebox sub-planes, and selecting a virtual image point array on each of the plurality of virtual image sub-planes, wherein a connection line connecting a point in the observation point array and a point in the virtual image point array extends through a corresponding projection display region, and an intersection of the connection line and the corresponding projection display region serves as an incident point;
calculating, according to the projection assembly, the laminated glass, and a plurality of connection lines, a plurality of theoretical wedge-angle values of the laminated glass at incident points, wherein with the plurality of theoretical wedge-angle values of the laminated glass at the incident points no reflected ghosting is observed for the projection image;
obtaining, by fitting the plurality of theoretical wedge-angle values and distances from the incident points corresponding to the plurality of theoretical wedge-angle values to the bottom edge of the laminated glass, a first variation curve that the wedge angle varies with the distances from the incident points to the bottom edge of the laminated glass;
calculating a plurality of limiting points according to the plurality of theoretical wedge-angle values and the distances from the incident points corresponding to the plurality of theoretical wedge-angle values to the bottom edge of the laminated glass, and connecting the plurality of limiting points to form a preset region;
adjusting the first variation curve to enable the first variation curve adjusted to have a continuous curve located within the preset region; and
determining a wedge-angle value of the laminated glass in each of the at least one projection display region according to the first variation curve adjusted.

13. The method for designing the HUD system of claim 12, wherein the first variation curve adjusted conforms to a first to fourth order function and has the continuous curve that decreases non-linearly.

14. The method for designing the HUD system of claim 12, wherein the eyebox plane comprises a first eyebox sub-plane, a second eyebox sub-plane, and a third eyebox sub-plane which are sequentially arranged from low to high; the virtual image plane comprises a first virtual image sub-plane, a second virtual image sub-plane, and a third virtual image sub-plane which are sequentially arranged from high to low; the preset region is a polygon, and the plurality of limiting points comprise a first limiting point, a second limiting point, a third limiting point, and a fourth limiting point;
calculating the plurality of limiting points according to the plurality of theoretical wedge-angle values and the distances from the incident points corresponding to the plurality of theoretical wedge-angle values to the bottom edge of the laminated glass comprises:
obtaining a first line by connecting a bottom point of a perpendicular bisector of the first eyebox sub-plane and a central point of the first virtual image sub-plane, wherein the first line intersects the at least one projection display region at a first incident point; obtaining a second line by connecting a top point of a perpendicular bisector of the second eyebox sub-plane and an upper left corner point of the second virtual image sub-plane, wherein the second line intersects the at least one projection display region at a second incident point; obtaining a third line by connecting a top point of a perpendicular bisector of the third eyebox sub-plane and a central point of the third virtual image sub-plane, wherein the third line intersects the at least one projection display region at a third incident point; and obtaining a fourth line by connecting a bottom point of the perpendicular bisector of the second eyebox sub-plane and a lower right corner point of the second virtual image sub-plane, wherein the fourth line intersects the at least one projection display region at a fourth incident point;
calculating, according to the projection assembly, the laminated glass, and the first line, a first limiting theoretical wedge-angle value at the first incident point through which no reflected ghosting is observed; calculating, according to the projection assembly, the laminated glass, and the second line, a second limiting theoretical wedge-angle value at the second incident point through which no reflected ghosting is observed; calculating, according to the projection assembly, the laminated glass, and the third line, a third limiting theoretical wedge-angle value at the third incident point through which no reflected ghosting is observed; and calculating, according to the projection assembly, the laminated glass, and the fourth line, a fourth limiting theoretical wedge-angle value at the fourth incident point through which no reflected ghosting is observed; and
obtaining the first limiting point according to the first limiting theoretical wedge-angle value and a distance from the first incident point to the bottom edge of the laminated glass; obtaining the second limiting point according to the second limiting theoretical wedge-angle value and a distance from the second incident point to the bottom edge of the laminated glass; obtaining the third limiting point according to the third limiting theoretical wedge-angle value and a distance from the third incident point to the bottom edge of the laminated glass; and obtaining the fourth limiting point according to the fourth limiting theoretical wedge-angle value and a distance from the fourth incident point to the bottom edge of the laminated glass.

15. The method for designing the HUD system of claim 14, wherein "after obtaining the first limiting point according to the first limiting theoretical wedge-angle value and the distance from the first incident point to the bottom edge of the laminated glass, obtaining the second limiting point according to the second limiting theoretical wedge-angle value and the distance from the second incident point to the bottom edge of the laminated glass, obtaining the third limiting point according to the third limiting theoretical wedge-angle value and the distance from the third incident point to the bottom edge of the laminated glass, and obtaining the fourth limiting point according to the fourth limiting theoretical wedge-angle value and the distance from the fourth incident point to the bottom edge of the laminated glass", "calculating the plurality of limiting points according to the plurality of theoretical wedge-angle values and the distances from the incident points corresponding to the plurality of theoretical wedge-angle values to the bottom edge of the laminated glass" further comprises:
obtaining a fifth line by connecting a top point of the perpendicular bisector of the first eyebox sub-plane and the central point of the first virtual image sub-plane, wherein the fifth line intersects the at least one projection display region at a fifth incident point; obtaining a sixth line by connecting a bottom point of the perpendicular bisector of the third eyebox sub-plane and the central point of the third virtual image sub-plane, wherein the sixth line intersects the at least one projection display region at a sixth incident point;
calculating, according to the projection assembly, the laminated glass, and the fifth line, a fifth limiting theoretical wedge-angle value at the fifth incident point through which no reflected ghosting is observed; and calculating, according to the projection assembly, the laminated glass, and the sixth line, a sixth limiting theoretical wedge-angle value at the sixth incident point through which no reflected ghosting is observed;
obtaining the fifth limiting point according to the fifth limiting theoretical wedge-angle value and a distance from the fifth incident point to the bottom edge of the laminated glass; and obtaining the sixth limiting point according to the sixth limiting theoretical wedge-angle value and a distance from the sixth incident point to the bottom edge of the laminated glass; and
vertexes of the preset region further comprise the fifth limiting point and the sixth limiting point, wherein the preset region is formed by sequentially connecting the first limiting point, the fifth limiting point, the second limiting point, the third limiting point, the sixth limiting point, and the fourth limiting point.

16. The method for designing the HUD system of claim 15, wherein a first limiting line segment is formed by connecting the first limiting point and the fourth limiting point, a second limiting line segment is formed by connecting the second limiting point and the third limiting point, and adjusting the first variation curve to enable the first variation curve adjusted to have the continuous curve located within the preset region comprises:
adjusting the first variation curve to enable the first variation curve adjusted to have the continuous curve located within the preset region, and to enable the first variation curve adjusted to intersect the first limiting line segment and/or the second limiting line segment.

17. The method for designing the HUD system of any one of claims 14 to 16, wherein calculating the plurality of limiting points according to the plurality of theoretical wedge-angle values and the distances from the incident points corresponding to the plurality of theoretical wedge-angle values to the bottom edge of the laminated glass comprises:
obtaining a plurality of seventh lines by connecting observation points on the perpendicular bisector of the second eyebox sub-plane and virtual image points on the second virtual image sub-plane, wherein the plurality of seventh lines intersect the at least one projection display region at a plurality of seventh incident points;
calculating, according to the projection assembly, the laminated glass, and the plurality of seventh lines, a plurality of seventh limiting theoretical wedge-angle values at the plurality of seventh incident points through which no reflected ghosting is observed; and
obtaining, according to the plurality of seventh limiting theoretical wedge-angle values and distances from the plurality of seventh incident points to the bottom edge of the laminated glass, a distribution of discrete points; and obtaining a seventh limiting point by calculating a centroid of the distribution of the discrete points; and
adjusting the first variation curve to enable the first variation curve adjusted to have the continuous curve located within the preset region comprises:
adjusting the first variation curve to enable the first variation curve adjusted to have the continuous curve located within the preset region, and to enable the first variation curve adjusted to extend through the seventh limiting point.

18. The method for designing the HUD system of any one of claims 14 to 16, wherein
calculating the plurality of limiting points according to the plurality of theoretical wedge-angle values and the distances from the incident points corresponding to the plurality of theoretical wedge-angle values to the bottom edge of the laminated glass comprises:
obtaining an eighth line by connecting a midpoint of the perpendicular bisector of the second eyebox sub-plane and a central point of the second virtual image sub-plane, wherein the eighth line intersects the at least one projection display region at an eighth incident point;
calculating, according to the projection assembly, the laminated glass, and the eighth line, an eighth limiting theoretical wedge-angle value at the eighth incident point through which no reflected ghosting is observed; and
obtaining an eighth limiting point according to the eighth limiting theoretical wedge-angle value and a distance from the eighth incident point to the bottom edge of the laminated glass; and
adjusting the first variation curve to enable the first variation curve adjusted to have the continuous curve located within the preset region comprises:
adjusting the first variation curve to enable the first variation curve adjusted to have the continuous curve located within the preset region, and to enable the first variation curve adjusted to extend through the eighth limiting point.

19. The method for designing the HUD system of claim 12, wherein a ratio of a maximum local range ΔW of the plurality of theoretical wedge-angle values to a global range ΔC of the plurality of theoretical wedge-angle values is: ΔW/ΔC ≤ 0.9.

20. The method for designing the HUD system of claim 12, wherein the at least one projection display region comprises at least two first projection display regions or at least two second projection display regions, at least two first variation curves adjusted that the wedge angle varies with distances from incident points to the bottom edge of the laminated glass are obtained through fitting, wherein when a maximum deviation value between two adjacent first variation curves adjusted is greater than 0.15 mrad, after "determining the wedge-angle value of the laminated glass in each of the at least one projection display region according to the first variation curve adjusted", the method further comprises:
adjusting a distance between the eyebox plane and a virtual image plane corresponding to one of the two adjacent first variation curves adjusted;
recalculating out a plurality of new theoretical wedge-angle values;
obtaining, by fitting the plurality of new theoretical wedge-angle values and distances from incident points corresponding to the plurality of new theoretical wedge-angle values to the bottom edge of the laminated glass, a new first variation curve that the wedge angle varies with the distances from the incident points to the bottom edge of the laminated glass; and recalculating out a new preset region;
adjusting the new first variation curve to enable the new first variation curve adjusted to have a continuous curve located within the new preset region;
judging whether a maximum deviation value between the new first variation curve adjusted and another one of the two adjacent first variation curves adjusted is less than or equal to 0.15 mrad;
if not, repeating above operations; and
if yes, determining wedge-angle values of the laminated glass in each of the at least two first projection display regions or each of the at least two second projection display regions according to the new first variation curve adjusted.

21. The method for designing the HUD system of claim 12, wherein the at least one projection display region comprises at least two first projection display regions or at least two second projection display regions, at least two first variation curves adjusted that the wedge angle varies with distances from incident points to the bottom edge of the laminated glass are obtained through fitting, wherein when a maximum deviation value between two adjacent first variation curves adjusted is greater than 0.2 mrad, after "determining the wedge-angle value of the laminated glass in each of the at least one projection display region according to the first variation curve adjusted", the method further comprises:
adjusting a distance between the eyebox plane and a virtual image plane corresponding to one of the two adjacent first variation curves adjusted;
recalculating out a plurality of new theoretical wedge-angle values;
obtaining, by fitting the plurality of new theoretical wedge-angle values and distances from incident points corresponding to the plurality of new theoretical wedge-angle values to the bottom edge of the laminated glass, a new first variation curve that the wedge angle varies with the distances from the incident points to the bottom edge of the laminated glass; and recalculating out a new preset region;
adjusting the new first variation curve to enable the new first variation curve adjusted to have a continuous curve located within the new preset region;
judging whether a maximum deviation value between the new first variation curve adjusted and another one of the two adjacent first variation curves adjusted is less than or equal to 0.2 mrad;
if not, repeating above operations;
if yes, determining wedge-angle values of the laminated glass in each of the at least two first projection display regions or each of the at least two second projection display regions according to the new first variation curve adjusted.

22. The method for designing the HUD system of claim 21, wherein a ratio of a maximum local range ΔWU in a set of a plurality of adjusted theoretical wedge-angle values to a global range ΔCU in the set of the plurality of adjusted theoretical wedge-angle values is: ΔWU/ΔCU ≤ 0.9.
